# FASCICULE DE BREVET EUROPEEN

(11) **EP 1 657 951 B1**
(45) Date de publication et mention de la délivrance du brevet: **14.01.2009**
(21) Numéro de dépôt: 05292361.2
(22) Date de dépôt: 08.11.2005
(51) Int. Cl.: H04W 8/24

(54) **Autorisation de contrôle externe de terminaux mobiles grâce à des étiquettes d'identification par fréquences radio (RFID)**
Externe Zugangskontrolle von Mobilendgeräten mittels RFID
Authorisation of external control of mobile terminals thanks to Radio Frequency Identification (RFID)

(30) Priorité: 10.11.2004 FR 0411982
(43) Date de publication de la demande: 17.05.2006
(73) Titulaire: Société Française du Radiotéléphone-SFR, 75008 Paris (FR)
(72) Inventeur: Faisy, Christian, 97417 La Montagne (FR)
(74) Mandataire: Debay, Yves

(56) Documents cités:
- EP-A- 1 215 632
- WO-A-00/69202
- PATENT ABSTRACTS OF JAPAN vol. 2003, no. 12, 5 décembre 2003 (2003-12-05) & JP 2003 224677 A (SONY CORP), 8 août 2003 (2003-08-08) & WO 99/55102 A (NETLINE COMMUNICATIONS TECHNOLOGIES LTD; TE-ENI, BEN; ISRAELI, GIL) 28 octobre 1999 (1999-10-28)

## Description

Il est connu dans l'art antérieur des procédés et des systèmes de controle du fonctionnement des téléphones mobiles dans certaines zones géographiques par brouillage des signaux des réseaux des opérateurs ou par simulation de l'absence de réseau à l'intérieur de ces zones géographiques. Le brouillage des signaux des réseaux consiste en l'émission de fréquences perturbant l'harmonie du réseau dans la zone géographique à contrôler. La simulation de l'absence de réseau consiste en l'émission de signaux d'absence de réseau aux terminaux mobiles se trouvant dans la zone géographique à contrôler.

Il est également connu de l'art antérieur, notamment par la demande de brevet EP 1 215 632, des systèmes de gestion d'entrée permettant de gérer, à un point de contrôle donné, l'entrée d'utilisateurs identifiés grâce à leur terminal communicant portable. Ces systèmes permettent l'authentification du terminal communicant de l'utilisateur puis, le cas échéant, l'autorisation de l'accès de l'utilisateur à un lieu protégé par le point de contrôle, avec une éventuelle extinction du terminal communicant.

Il est également connu de l'art antérieur, notamment par la demande de brevet JP 2003 224677, des systèmes d'acquisition et de traitement de données permettant la détection d'une étiquette RFID implantée sur un terminal communicant portable d'un utilisateur, pour l'établissement d'une communication « Bluetooth » entre ce terminal communicant et le système. Cette communication « Bluetooth » permet une identification du terminal communicant par le système qui peut alors envoyer au terminal communicant une adresse d'annonce publicitaire.

Les solutions connues des demandes EP 1 215 632 et JP 2003 224677 présentent les inconvénients que ces systèmes sont agencés pour la mise en oeuvre d'une tâche particulière qui ne dépend pas d'une autorisation de la prise de contrôle du terminal communicant de l'utilisateur et que cette tâche particulière n'implique, respectivement, qu'une extinction arbitraire du terminal et un établissement d'une communication « Bluetooth », sans que d'autres types de contrôle ne puissent être définis en fonction d'une autorisation préalablement établie.

Les différentes solutions connues de l'art antérieur présentent les inconvénients de ne pas permettre un contrôle efficace de l'interdiction du fonctionnement des terminaux. Ces solutions sont, en outre, non conformes à la législation en vigueur qui nécessite une autorisation préalable du contrôle externe des terminaux mobiles par leurs utilisateurs. D'autre part, ces solutions ne permettent aucun discernement dans l'interdiction du fonctionnement de différents terminaux. Par exemple, les médecins d'un hôpital ne peuvent pas utiliser leur terminal mobile communicant dans l'enceinte même du lieu de travail, lors de la mise en oeuvre de ces solutions de brouillage ou de simulation de l'absence de réseau. Enfin, ces solutions ne sont pas efficacement adaptées aux avions et aux véhicules roulants motorisés.

La présente invention a pour but de supprimer certains inconvénients de l'art antérieur en proposant un système d'autorisation de contrôle externe de terminaux mobiles permettant à un équipement, dit tiers, de prendre le contrôle du fonctionnement de terminaux mobiles, dans une zone géographique restreinte sous le contrôle de l'équipement tiers, en fonction d'identifiants des utilisateurs de ces terminaux mobiles et permettant aux utilisateurs d'autoriser ou non le contrôle externe du terminal mobile par un équipement tiers contrôlant une zone géographique restreinte.

Ce but est atteint par un système d'autorisation de contrôle externe d'au moins un terminal mobile pourvu d'un lecteur RFID, par au moins un équipement tiers, grâce à au moins une étiquette d'identification par fréquences radio (RFID) comportant des moyens de mémorisation et de traitement de données et des moyens de communication par fréquences radio, l'étiquette RFID est implantée sur le terminal mobile présent dans un champ d'influence de l'équipement tiers, caractérisé en ce que :
- le système est pourvu de moyens d'autorisation de la prise de contrôle du fonctionnement du terminal mobile par l'équipement tiers, ces moyens d'autorisation comportant au moins des données transmises entre l'étiquette RFID et l'équipement tiers et/ou réciproquement,
- le terminal mobile est pourvu d'un module de contrôle du fonctionnement de moyens de traitement du terminal mobile, agencé pour l'exécution d'au moins une instruction de contrôle du terminal mobile par l'équipement tiers autorisé, en fonction d'identifiants de l'étiquette RFID de l'utilisateur de ce terminal mobile, cette instruction étant élaborée et envoyée par un équipement tiers autorisé, ce dernier possédant, d'une part, des moyens de communication avec des étiquettes RFID présentes dans son champ d'influence et, d'autre part, des moyens de traitement comportant des moyens d'authentification des identifiants d'étiquettes RFID, des moyens de décision d'envoi d'instructions de contrôle exécutables par les module de contrôle du fonctionnement des moyens de traitement de terminaux mobiles.

Selon une autre particularité, les moyens de traitement de l'équipement tiers comportent des moyens de création d'instructions de contrôle de terminaux mobiles, ces moyens de création permettant d'élaborer, grâce à des moyens de saisie et des moyens d'affichage de l'équipement tiers, des instructions de contrôle exécutables par les modules de contrôle du fonctionnement des moyens de traitement de terminaux mobiles et d'enregistrer ces instructions de contrôle dans des moyens de mémorisation de l'équipement tiers.

Selon une autre particularité, les moyens d'autorisation de la prise de contrôle du fonctionnement du terminal mobile par l'équipement tiers comportent soit au moins un identifiant de l'équipement tiers et des données définissant les équipements tiers autorisés à prendre le contrôle du terminal mobile, soit au moins un identifiant de l'étiquette RFID de l'utilisateur de ce terminal mobile et des instructions de contrôle associées à ces identifiants de l'étiquette RFID dans des moyens de mémorisation de l'équipement tiers, soit au moins un identifiant de l'étiquette RFID de l'utilisateur de ce terminal mobile et des données définissant les équipements tiers autorisés à prendre le contrôle du terminal mobile.

Selon une autre particularité, les moyens de création d'instructions de contrôle de terminaux mobiles, implémentés dans les moyens de traitement de l'équipement tiers, comportent des moyens d'associer aux instructions un identifiant de l'équipement tiers permettant aux moyens de traitement du terminal mobile d'identifier l'équipement tiers, par consultation de moyens de mémorisation présents dans le terminal mobile stockant une liste d'équipement tiers autorisés à exercer un contrôle sur le terminal mobile, cette authentification permettant d'autoriser le contrôle du terminal mobile par l'équipement tiers.

Selon une autre particularité, les moyens de mémorisation de l'équipement tiers stockent au moins une base de données des utilisateurs de terminaux mobiles pourvus d'une étiquette RFID dont l'identifiant a été déclaré, au préalable, auprès de l'équipement tiers et stocké dans cette base de données, pour l'authentification des identifiants des étiquettes RFID implantées sur les terminaux mobiles des utilisateurs et la décision du contrôle à exercer les terminaux mobiles, cette base de données contenant, d'une part, une table de correspondance entre chacune des données représentatives des identifiants déclarés et au moins une donnée représentative des différentes instructions correspondant au contrôle à exercer et à envoyer sur le terminal mobile dont l'identifiant de l'étiquette RFID est déclaré et, d'autre part, des données représentatives des différentes instructions de contrôle à envoyer sur les terminaux mobiles pourvus d'une étiquette RFID dont l'identifiant est inconnu.

Selon une autre particularité, les moyens de communication de l'équipement tiers comportent des moyens d'envoi, par fréquences radio, d'au moins une instruction de contrôle du fonctionnement d'au moins un terminal mobile, vers au moins une étiquette RFID présente dans le champ d'influence des fréquences radio de l'équipement tiers et implantée sur le terminal mobile dont le lecteur RFID permet de lire l'instruction reçue par les moyens de communication par fréquences radio de l'étiquette RFID et enregistrée dans les moyens de mémorisation et traitement de données de l'étiquette RFID, le module de contrôle du fonctionnement des moyens de traitement du terminal mobile permettant d'exécuter l'instruction lue par le lecteur RFID.

Selon une autre particularité, les moyens de création d'instructions de contrôle présents dans les moyens de traitement de l'équipement tiers permettent à l'équipement tiers d'élaborer des instructions de contrôle dont l'exécution par le module de contrôle du fonctionnement des moyens de traitement du terminal mobile, aboutit à au moins un paramétrage du terminal mobile, par enregistrement d'au moins un des paramètres suivants dans une mémoire du terminal mobile stockant ses paramètres de configuration :
- maintien du terminal mobile dans son mode de fonctionnement,
- interdiction de l'utilisation du terminal mobile,
- extinction du terminal mobile,
- mise en veille du terminal mobile,
- mise en mode vibreur du terminal mobile,
- mise en mode restreint aux appels en urgence du terminal mobile.

Selon une autre particularité, les moyens d'envoi de demandes d'identification des étiquettes RFID présentes dans le champ d'influence des moyens de communication de l'équipement tiers, sont activés en permanence de façon à envoyer cette demande d'identification en permanence, l'étiquette RFID comportant, d'une part, des moyens d'envoi de la dernière instruction de contrôle exécutée par le terminal mobile vers l'équipement tiers, ces moyens étant activés à la réception de la demande d'identification, après envoi de l'identifiant de l'étiquette RFID à l'équipement tiers, pour permettre à ce dernier d'obtenir une indication du contrôle exercé sur les terminaux mobiles présents dans son champ d'influence et, d'autre part, des moyens de création d'au moins une instruction d'annulation de la dernière instruction de contrôle exécutée par les moyens de traitement du terminal mobile, ces moyens étant activés lorsque l'étiquette RFID ne reçoit plus de demande d'identification, pour permettre un retour du terminal mobile à un mode de fonctionnement normal.

Un autre but de la présente invention est de proposer un terminal mobile permettant à un équipement, dit tiers, de prendre le contrôle du fonctionnement du terminal mobile, dans une zone géographique restreinte sous le contrôle de l'équipement tiers, en fonction d'identifiants de l'utilisateur de ce terminal mobile et permettant à l'utilisateur d'autoriser ou non le contrôle externe de son terminal mobile par un équipement tiers contrôlant une zone géographique restreinte.

Ce but est atteint par un terminal mobile d'autorisation de contrôle externe, comportant un lecteur RFID permettant d'accéder aux informations stockées dans au moins une étiquette d'identification par fréquences radio de l'utilisateur de ce terminal mobile, l'étiquette RFID comportant des moyens de mémorisation et de traitement de données et des moyens de communication par fréquences radio, caractérisé en ce que, d'une part, le terminal mobile et pourvu de l'étiquette RFID lui fournissant des moyens d'autorisation de la prise de contrôle du fonctionnement du terminal mobile par un équipement tiers dans le champ d'influence duquel le terminal mobile se trouve, ces moyens d'autorisation comportant au moins des données transmises entre l'étiquette RFID et l'équipement tiers et/ou réciproquement et, d'autre part, le terminal mobile comporte un module de contrôle du fonctionnement de moyens de traitement du terminal mobile, agencé pour exécuter, en fonction d'identifiants de l'étiquette RFID de l'utilisateur de ce terminal mobile, au moins une instruction de contrôle du terminal mobile par l'équipement tiers autorisé.

Selon une autre particularité, les moyens d'autorisation de la prise de contrôle du fonctionnement du terminal mobile par un équipement tiers comportent soit au moins un identifiant de l'équipement tiers et des données définissant les équipements tiers autorisés à prendre le contrôle du terminal mobile, stockées dans des moyens de mémorisation accessibles au terminal mobile, soit au moins un identifiant de l'étiquette RFID de l'utilisateur de ce terminal mobile et des instructions de contrôle associées à ces identifiants de l'étiquette RFID dans des moyens de mémorisation de l'équipement tiers, soit au moins un identifiant de l'étiquette RFID de l'utilisateur de ce terminal mobile et des données définissant les équipements tiers autorisés à prendre le contrôle du terminal mobile, stockées dans des moyens de mémorisation accessibles au terminal mobile.

Selon une autre particularité, les moyens de traitement du terminal mobile comportent des moyens de configuration du terminal mobile pour autoriser son contrôle externe par un équipement tiers, le terminal mobile comportant des moyens de saisie et d'affichage pour, d'une part, l'affichage d'un menu de saisie d'un code personnel autorisant l'accès à un menu de sélection d'un choix, parmi au moins un choix d'autorisation du contrôle externe et un choix de refus du contrôle externe par des équipements tiers, et, d'autre part, la saisie, par l'utilisateur du terminal mobile, du code personnel d'autorisation de l'accès au menu de sélection d'un choix et d'au moins un choix d'autorisation ou de refus du contrôle externe du terminal mobile, les moyens de traitement du terminal mobile permettant également l'authentification, d'une part, de l'identifiant de l'étiquette RFID lue par le lecteur RFID du terminal mobile et, d'autre part, du code personnel saisi par l'utilisateur, par consultation de moyens de mémorisation présents dans le terminal mobile, puis, le cas échéant, la mise en attente du terminal mobile d'au moins une instruction de contrôle par un équipement tiers lorsqu'un choix d'autorisation du contrôle externe a été saisi.

Selon une autre particularité, les moyens de configuration du terminal mobile sont activables par les moyens de traitement du terminal mobile, à chaque initialisation du terminal mobile et à la demande de l'utilisateur, grâce à un menu spécifique, sur les moyens de saisie et d'affichage du terminal mobile.

Selon une autre particularité, les moyens de configuration du terminal mobile comportent des moyens d'enregistrement, dans les moyens de mémorisation présents dans le terminal mobile, du code personnel d'autorisation d'accès au menu de sélection d'un choix de contrôle externe du terminal mobile, saisi par l'utilisateur lors de la première autorisation de contrôle externe du terminal mobile, ce code personnel étant enregistré en correspondance avec l'identifiant de l'étiquette RFID lu par le lecteur RFID et enregistré dans les moyens de mémorisation présents dans le terminal mobile, lors de la première autorisation de contrôle externe du terminal mobile.

Selon une autre particularité, le terminal mobile comporte un module électronique portable consistant en une carte SIM accessible grâce à un lecteur de carte SIM du terminal mobile et possédant des moyens de mémorisation de données dans lesquels est stocké le module de contrôle du fonctionnement du terminal mobile, ce module consistant en une application de type « SIM Tool Kit » contrôlant les moyens de traitement du terminal mobile pour l'exécution des instructions de contrôle envoyées par l'équipement tiers et permettant la configuration du terminal mobile pour l'autorisation du contrôle externe de son fonctionnement.

Selon une autre particularité, les moyens de traitement du terminal mobile comportent des moyens d'annulation de la dernière instruction de contrôle exécutée, ces moyens étant activés automatiquement lors de l'extinction ou de l'allumage du terminal mobile et activables par l'utilisateur par sélection d'un menu spécifique.

Un autre but de la présente invention est de proposer un module électronique portable qui peut être mis en oeuvre dans un terminal mobile pour l'autorisation du contrôle externe de ce terminal mobile, ce module électronique portable permettant à un équipement, dit tiers, de prendre le contrôle du fonctionnement du terminal mobile, dans une zone géographique restreinte sous le contrôle de l'équipement tiers, en fonction d'identifiants de l'utilisateur de ce terminal mobile et permettant à l'utilisateur d'autoriser ou non le contrôle externe de son terminal mobile par un équipement tiers contrôlant une zone géographique restreinte.

Ce but est atteint par un module électronique portable d'autorisation de contrôle externe, pour le contrôle externe d'au moins un terminal mobile par au moins un équipement tiers pourvu de moyens de communication avec au moins une étiquette d'identification par fréquences radio implantée sur le terminal mobile présent dans le champ d'influence de l'équipement tiers, caractérisé en ce que, d'une part, une étiquette RFID est implantée sur le module électronique portable et fournit des moyens d'autorisation de la prise de contrôle du fonctionnement du terminal mobile par un équipement tiers dans le champ d'influence duquel le terminal mobile se trouve, ces moyens d'autorisation comportant au moins des données transmises entre l'étiquette RFID et l'équipement tiers et/ou réciproquement et, d'autre part, le module électronique portable possède des moyens de mémorisation accessibles par un lecteur du terminal mobile, ces moyens de mémorisation stockant un module de contrôle du fonctionnement du terminal mobile, ce module consistant en une application agencée pour l'exécution, en fonction d'identifiants de l'étiquette RFID de l'utilisateur de ce terminal mobile, d'au moins une instruction de contrôle du terminal mobile par l'équipement tiers autorisé.

Selon une autre particularité, les moyens d'autorisation de la prise de contrôle du fonctionnement du terminal mobile par un équipement tiers comportent soit au moins un identifiant de l'équipement tiers et des données définissant les équipements tiers autorisés à prendre le contrôle du terminal mobile, stockées dans des moyens de mémorisation accessibles au terminal mobile, soit au moins un identifiant de l'étiquette RFID de l'utilisateur de ce terminal mobile et des instructions de contrôle associées à ces identifiants de l'étiquette RFID dans des moyens de mémorisation de l'équipement tiers, soit au moins un identifiant de l'étiquette RFID de l'utilisateur de ce terminal mobile et des données définissant les équipements tiers autorisés à prendre le contrôle du terminal mobile, stockées dans des moyens de mémorisation accessibles au terminal mobile

Selon une autre particularité, les instructions de contrôle du terminal mobile sont extraites de moyens de mémorisation de l'équipement tiers, en fonction de l'identifiant de l'étiquette RFID, puis envoyées à l'étiquette RFID grâce aux moyens de communication par fréquences radio de l'équipement tiers et sont lues par les moyens de traitement du terminal mobile grâce à un lecteur RFID.

Selon une autre particularité, le module électronique portable consiste en une carte SIM, l'application stockée dans ses moyens de mémorisation consistant en une application de type « SIM tool kit » et le terminal mobile consistant en un téléphone mobile muni d'un lecteur de carte SIM.

Selon une autre particularité, le module électronique portable consiste en un circuit intégré comportant une mémoire, l'application stockée dans ses moyens de mémorisation consistant en une application d'exécution des instructions de contrôle sur des terminaux mobiles munis d'un lecteur de carte mémoire.

Un autre but de la présente invention est de proposer un procédé d'autorisation de contrôle externe de terminaux mobiles permettant à un équipement, dit tiers, de prendre le contrôle du fonctionnement de terminaux mobiles, dans une zone géographique restreinte sous le contrôle de l'équipement tiers, en fonction d'identifiants des utilisateurs de ces terminaux mobiles et permettant aux utilisateurs d'autoriser ou non le contrôle externe du terminal mobile par un équipement tiers contrôlant une zone géographique restreinte.

Ce but est atteint par un procédé d'autorisation de contrôle externe d'au moins un terminal mobile par au moins une instruction de contrôle, exécutable par un module de contrôle du fonctionnement des moyens de traitement du terminal mobile et élaborée grâce à des moyens de traitement d'au moins un équipement tiers pourvu de moyens de communication avec au moins une étiquette d'identification par fréquences radio implantée sur le terminal mobile présent dans le champ d'influence de l'équipement tiers, caractérisé en ce qu'il comporte les étapes suivantes :
- autorisation de la prise de contrôle du fonctionnement du terminal mobile par un équipement tiers dans le champ d'influence duquel le terminal mobile se trouve, au moins par l'intermédiaire de données transmises entre l'étiquette RFID et l'équipement tiers et/ou réciproquement,
- création préalable d'instructions de contrôle de terminaux mobiles, grâce aux moyens de traitement de l'équipement tiers comportant des moyens de création d'instructions de contrôle permettant d'élaborer, grâce à des moyens de saisie et des moyens d'affichage de l'équipement tiers, des instructions de contrôle exécutables par un module de contrôle du fonctionnement des moyens de traitement de terminaux mobiles et d'enregistrer ces instructions de contrôle dans des moyens de mémorisation de l'équipement tiers,
- envoi, par les moyens de communication de l'équipement tiers, d'une demande d'identification des étiquettes RFID présentes dans son champ d'influence,
- réception de la demande d'identification par des moyens de communication par fréquences radio de l'étiquette RFID, puis envoi de son identifiant contenu dans des moyens de mémorisation et de traitement de données de l'étiquette RFID,
- réception de l'identifiant de l'étiquette RFID par les moyens de communication de l'équipement tiers,
- authentification de l'identifiant par les moyens de traitement de l'équipement tiers et décision d'envoi d'au moins une instruction de contrôle du terminal mobile associé à l'étiquette RFID.

Selon une autre particularité, l'étape d'autorisation de la prise de contrôle du fonctionnement du terminal mobile par l'équipement tiers comporte :
- soit une étape d'envoi, par l'équipement tiers vers l'étiquette RFID, d'au moins un identifiant de l'équipement tiers puis de comparaison, par le module de contrôle, de cet identifiant avec des données définissant les équipements tiers autorisés à prendre le contrôle du terminal mobile, stockées dans des moyens de mémorisation accessibles au terminal mobile,
- soit une étape d'envoi, par l'étiquette RFID vers l'équipement tiers, d'au moins un identifiant de l'étiquette RFID de l'utilisateur de ce terminal mobile puis de consultation, par l'équipement tiers, d'instructions de contrôle associées à ces identifiants de l'étiquette RFID dans des moyens de mémorisation de l'équipement tiers,
- soit une étape d'envoi, par l'étiquette RFID vers l'équipement tiers, d'au moins un identifiant de l'étiquette RFID de l'utilisateur de ce terminal mobile et d'envoi, par le terminal mobile, via l'étiquette RFID, vers l'équipement tiers, de données définissant les équipements tiers autorisés à prendre le contrôle du terminal mobile, stockées dans des moyens de mémorisation accessibles au terminal mobile, puis comparaison, par l'équipement tiers, de cet identifiant avec ces données.

Selon une autre particularité, le procédé comporte une étape préalable de création d'instructions de contrôle de terminaux mobiles, grâce aux moyens de traitement de l'équipement tiers comportant des moyens de création d'instructions de contrôle permettant d'élaborer, grâce à des moyens de saisie et des moyens d'affichage de l'équipement tiers, des instructions de contrôle exécutables par un module de contrôle du fonctionnement des moyens de traitement de terminaux mobiles et d'enregistrer ces instructions de contrôle dans des moyens de mémorisation de l'équipement tiers.

Selon une autre particularité, l'étape d'authentification de l'identifiant de l'étiquette RFID est réalisée par les moyens de traitement de l'équipement tiers, grâce à au moins une étape de consultation, dans des moyens de mémorisation de l'équipement tiers, d'au moins une base de données des utilisateurs de terminaux mobiles pourvus d'une étiquette RFID dont l'identifiant a été déclaré auprès de l'équipement tiers, grâce à une étape préalable de déclaration des identifiants des étiquettes RFID, cette base de données contenant, d'une part, une table de correspondance entre des données représentatives des identifiants déclarés et des données représentatives des différentes instructions de contrôle à envoyer sur les terminaux mobiles pourvus d'une étiquette RFID dont l'identifiant est déclaré et, d'autre part, des données représentatives des différentes instructions de contrôle à envoyer sur les terminaux mobiles pourvus d'une étiquette RFID dont l'identifiant est inconnu, la consultation de cette base de données permettant aux moyens de traitement de l'équipement tiers d'effectuer l'étape de décision d'envoi d'au moins une instruction permettant d'exercer un contrôle du fonctionnement des terminaux mobiles.

Selon une autre particularité, l'envoi d'au moins une instruction de contrôle du fonctionnement des moyens de traitement du terminal mobile consistent en les étapes suivantes :
- envoi par fréquences radio, par les moyens de communication de l'équipement tiers, vers l'étiquette RFID, d'au moins une instruction de contrôle du fonctionnement des moyens de traitement du terminal mobile,
- réception de l'instruction par les moyens de communication par fréquences radio de l'étiquette RFID et enregistrement de l'instruction dans les moyens de mémorisation et traitement de données de l'étiquette RFID,
- lecture de l'instruction, par un lecteur RFID du terminal mobile et exécution de l'instruction par les moyens de traitement du terminal mobile.

Selon une autre particularité, les étapes d'envoi d'au moins une instruction permettant d'exercer le contrôle du fonctionnement du terminal mobile, provoquent l'exécution de l'instruction par les moyens de traitement du terminal mobile, cette exécution consistant en au moins une étape d'enregistrement, dans le terminal mobile, d'au moins un paramètre parmi les paramètres suivants :
- maintien du terminal mobile dans son mode de fonctionnement,
- interdiction de l'utilisation du terminal mobile,
- extinction du terminal mobile,
- mise en veille du terminal mobile,
- mise en mode vibreur du terminal mobile,
- mise en mode restreint aux appels en urgence du terminal mobile.

Selon une autre particularité, le contrôle externe du terminal mobile par l'équipement tiers nécessite une configuration préalable du terminal mobile par son utilisateur, grâce à la mise en oeuvre des étapes suivantes :
- affichage d'un menu de saisie d'un code personnel d'autorisation de contrôle externe du terminal mobile, puis saisie de ce code personnel par l'utilisateur du terminal mobile, grâce à des moyens de saisie et d'affichage du terminal mobile,
- authentification du code personnel saisi par l'utilisateur, par les moyens de traitement du terminal mobile, par consultation de moyens de mémorisation présents dans le terminal mobile,
- affichage d'un menu de sélection de choix, parmi au moins un choix d'autorisation du contrôle externe et un choix de refus du contrôle externe par des équipements tiers, puis saisie, par l'utilisateur, d'au moins un choix d'autorisation du contrôle externe du terminal mobile,
- attente du terminal mobile d'au moins une instruction de contrôle par un équipement tiers.

Selon une autre particularité, les étapes de la configuration du terminal mobile sont mises en oeuvre à chaque initialisation du terminal mobile et peuvent également être mises en oeuvre sur demande de l'utilisateur du terminal mobile par une étape de sélection d'un menu spécifique sur les moyens de saisie et d'affichage du terminal mobile.

Selon une autre particularité, la première activation de l'étiquette RFID du terminal mobile lors de l'étape affichage d'un menu de saisie d'un code RFID consiste en une étape d'enregistrement du code personnel d'autorisation de contrôle externe du terminal mobile, saisi par l'utilisateur lors de cette première activation, dans les moyens de mémorisation présents dans le terminal mobile, cette étape d'enregistrement étant accompagnée d'une étape d'enregistrement de l'identifiant de l'étiquette RFID en correspondance avec le code personnel saisi, dans les moyens de mémorisation présents dans le terminal mobile.

Selon une autre particularité, les étapes d'autorisation du contrôle externe du terminal mobile sont mises en oeuvre par un module de contrôle du fonctionnement du terminal mobile consistant en une application de type « SIM Tool Kit », stockée sur une carte SIM accessible grâce à un lecteur de carte SIM du terminal mobile et possédant des moyens de mémorisation de données, l'application contrôlant les moyens de traitement du terminal mobile pour l'exécution des instructions de contrôle envoyées par l'équipement tiers et permettant la configuration du terminal mobile pour l'autorisation du contrôle externe de son fonctionnement.

Selon une autre particularité, l'étape d'envoi, par les moyens de communication de l'équipement tiers, d'une demande d'identification des étiquettes RFID présentes dans son champ d'influence, est répétée en permanence de façon à provoquer, d'une part, lorsque l'étiquette RFID a déjà envoyé son identifiant à l'équipement tiers, une étape d'envoi de la dernière instruction de contrôle exécutée par le terminal mobile, vers l'équipement tiers qui obtient ainsi une indication du contrôle exercé sur les terminaux mobiles présents dans son champ d'influence et, d'autre part, lorsque l'étiquette RFID ne reçoit plus de demande d'identification, une étape de création, par l'étiquette RFID, d'au moins une instruction d'annulation de la dernière instruction de contrôle exécutée par les moyens de traitement du terminal mobile, suivie d'une étape d'exécution, par les moyens de traitement du terminal mobile, de cette annulation de la dernière instruction exécutée.

Selon une autre particularité, une étape d'extinction ou d'allumage du terminal mobile provoque une étape d'annulation de la dernière instruction de contrôle exécutée par les moyens de traitement du terminal mobile.

Selon une autre particularité, l'étape d'envoi, par les moyens de communication de l'équipement tiers, d'une demande d'identification des étiquettes RFID présentes dans son champ d'influence, est accompagnée de l'envoi d'un identifiant de l'équipement tiers, suivie d'une étape d'authentification de cet identifiant de l'équipement tiers par le terminal mobile, par consultation de moyens de mémorisation présents dans le terminal mobile.

D'autres particularités et avantages de la présente invention apparaîtront plus clairement à la lecture de la description ci-après, faite en référence aux dessins annexés, dans lesquels :
- la figure 1 représente un schéma du système selon un mode de réalisation de l'invention.
- La figure 2 représente un schéma des étapes du procédé selon un mode de réalisation de l'invention,

La présente invention concerne un système, un terminal, un module électronique portable et un procédé d'autorisation de contrôle externe de terminaux (3) mobiles grâce à au moins une étiquette (1) d'identification par fréquences radio (RFID). L'invention permet à un équipement (4), dit tiers, de prendre le contrôle du fonctionnement de terminaux (3) mobiles, dans une zone (R2) géographique restreinte sous le contrôle de l'équipement (4) tiers, en fonction d'identifiants de l'étiquette (1) RFID des utilisateurs de ces terminaux (3) mobiles. Le contrôle des moyens (30) de traitement des terminaux (3) mobiles est obtenu grâce à l'envoi, par l'équipement (4) tiers, d'instructions (10) exécutables par un module de contrôle du fonctionnement des moyens (30) de traitement de ces terminaux (3) mobiles. L'invention consiste en ce qu'au moins une étiquette (1) RFID, possédant des moyens (12) de communication par fréquences radio, est implantée sur le terminal (3) mobile qui possède un lecteur (32) RFID pour accéder à des données enregistrées dans des moyens (11) de mémorisation et de traitement de l'étiquette (1) RFID. Ce lecteur (32) RFID pourra, bien entendu et de façon connue en soi, également avoir des fonctions d'écriture pour modifier les données inscrites dans les étiquettes (1) RFID, quel que soit le mode de réalisation de l'invention. L'étiquette (1) peut, par exemple, être collée sur un module (2) électronique portable, accessible par un lecteur (33) du terminal (3) mobile et stockant une application permettant l'exécution des instructions par les moyens (30) de traitement du terminal (3) mobile. Le module (2) électronique portable, pourra consister simplement en un circuit intégré contenant une mémoire stockant le module de contrôle du fonctionnement du terminal (3) mobile. Ce circuit intégré pourra consister, selon différents modes de réalisation, en une carte mémoire ou en une carte SIM. Le module de contrôle du fonctionnement du terminal (3) mobile pourra également faire partie intégrante du terminal (3) mobile, par exemple en étant stocké sur dans une mémoire du terminal mobile et en étant exécuté sur les moyens (30) de traitement du terminal (3) mobile. L'invention permet également aux utilisateurs des terminaux (3) mobiles d'autoriser ou non le contrôle externe du terminal (3) mobile par un équipement (4) tiers contrôlant une zone (R2) géographique restreinte. L'invention prévoit également qu'un identifiant de l'équipement (4) tiers soit envoyé aux terminaux (3) mobiles présents dans son champ (R2) d'influence pour définir le type de contrôle que l'équipement (4) tiers est autorisé à exercer sur ces terminaux (3) mobiles.

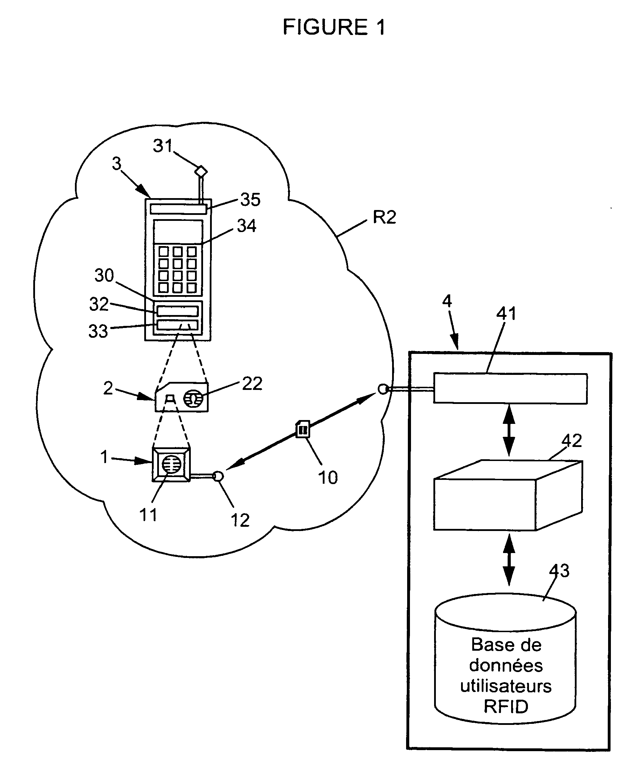

Le système selon l'invention va maintenant être décrit en référence à la figure 1.

Par le terme d'équipement (4) tiers, on entend tout terminal (ou ensemble de terminaux) pourvu des moyens décrits ci-après et permettant la mise en oeuvre de l'invention. L'équipement (4) tiers possède des moyens (41) de communication permettant une communication par fréquences radio avec des étiquettes (1) RFID présentes dans le champ (R2) d'influence des moyens (41) de communication de l'équipement (4) tiers. Ces moyens (41) de communication permettent l'identification des étiquettes (1) RFID présentes dans leur champ (R2) d'influence, grâce à des moyens d'envoi de demandes d'identification aux étiquettes (1) RFID. L'envoi des demandes d'identification des étiquettes (1) RFID et/ou l'envoi d'instructions de contrôle pourront également être associés à l'envoi d'un identifiant de l'équipement (4) tiers qui permettra éventuellement d'empêcher la prise de contrôle du fonctionnement du terminal (3) mobile par un équipement (4) tiers qui n'aurait pas été autorisé à prendre un tel contrôle des terminaux (3) mobiles. Les identifiants des équipements (4) tiers pourront consister en des données représentatives, par exemple, d'une suite de chiffres organisés en plusieurs champs. Les différents champs contenus dans l'identifiant d'un équipement (4) tiers pourront désigner, par exemple, l'activité du tiers (cinéma, théâtre, hôpital, etc.), le type de contrôle que le tiers est autorisé à exercer, un niveau de priorité du contrôle exercé par le tiers ou tout autre type d'information permettant de définir les droits que possède un équipement (4) tiers pour exercer un contrôle sur les terminaux (3) mobiles. Ainsi, les données représentatives d'un niveau de priorité du contrôle exercé par le tiers, contenues dans les identifiants des équipements (4) tiers, permettront, par exemple, d'éviter des interférences entre des instructions (10) provenant de deux équipements (4) tiers dont les champs (R2) d'influence se recouvrent partiellement et les instructions (10) provenant de l'équipement (4) tiers possédant la priorité la plus haute seront exécutées, éventuellement au dépend des instructions (10) provenant de l'équipement (4) tiers possédant la priorité la plus basse, si les deux instructions (10) ne sont pas compatibles. Les données représentatives du type de contrôle que le tiers est autorisé à exercer, contenues dans les identifiants des équipements (4) tiers, permettront, par exemple, à un équipement (4) tiers d'exercer tout type de contrôle sur les terminaux (3) mobiles présents dans son champ (R2) d'influence, éventuellement sans laisser le choix aux utilisateurs d'autoriser ou non ce contrôle de leur terminal (3) mobile. Par exemple, en cas de force majeure, des équipements (4) tiers, sous le contrôle d'un gouvernement, par exemple, pourrait interdire l'utilisation de tous les types de terminaux (3) mobiles présents dans leur champ (R2) d'influence, sauf, par exemple, les terminaux (3) mobiles des services gouvernementaux ou des services d'urgence. Les terminaux (3) mobiles selon l'invention pourront alors authentifier l'identifiant de l'équipement (4) tiers dans le champ (R2) duquel ils se trouvent, par exemple en consultant une liste d'identifiants d'équipements (4) tiers autorisés, stockée, par exemple, dans des moyens (22) de mémorisation présents dans ces terminaux (3) mobiles. Dans un autre exemple, l'autorisation du contrôle des terminaux en fonction de l'identifiant des équipements (4) tiers pourra être réalisé grâce à des données stockées dans ces moyens (22) de mémorisation présents dans les terminaux (3) mobiles ou dans les moyens (11) de mémorisation et de traitement de données de l'étiquette (1) RFID. Ces données stockées pourront, par exemple, correspondre à des valeurs possibles des données représentatives de certains champs des identifiants des équipements (4) tiers. Par exemple, ces moyens (22, 11) de mémorisation pourront stocker une liste d'activités de tiers autorisés à prendre le contrôle du terminal (3) mobile. Les équipements (4) tiers dont l'identifiant contient des données représentatives de l'une de ces activités (des équipements tiers autorisés à prendre le contrôle de ce terminal (3) mobile), stockées dans ces moyens (22, 11) de mémorisation, pourront alors exercer leur contrôle sur le terminal (3) mobile. Par exemple, si ces moyens (22, 11) de mémorisation stockent une liste contenant les activités « cinéma » et « aéroport », mais que le terminal (3) mobile se trouve dans le champ (R2) d'influence d'un équipement (4) tiers d'un théâtre, cet équipement (4) tiers du théâtre ne sera pas autorisé à prendre le contrôle du terminal (3) mobile alors qu'un équipement (4) tiers d'un cinéma ou d'un aéroport aurait été autorisé à prendre le contrôle de ce terminal (3) mobile. Pour déterminer s'il est autorisé à prendre le contrôle du terminal (3) mobile, les données représentatives de l'activité d'un équipement (4) tiers (contenues dans l'identifiant de cet équipement tiers) seront comparées aux données représentatives de cette liste d'activités de tiers autorisés à contrôler le terminal (3) mobile. L'équipement (4) tiers pourra, par exemple, soit envoyer une demande de transmission des activités des tiers autorisés à prendre le contrôle du terminal (3) mobile, soit envoyer son identifiant accompagné d'une instruction de comparaison de cet identifiant avec les données représentatives des équipements (4) tiers autorisés à exercer un contrôle sur le terminal (3) mobile. L'équipement (4) tiers selon l'invention comporte également des moyens (42) de traitement de données permettant notamment d'identifier les étiquettes (1) RFID présentes dans le champ (R2) d'influence de l'équipement (4) tiers, grâce à des moyens d'authentification des identifiants d'étiquettes (1) RFID, suite à la réception d'identifiants envoyés par les étiquettes (1) RFID en réponse aux demandes d'identification. Suite à l'authentification d'une étiquette (1) RFID et une éventuelle vérification du droit de l'équipement (4) tiers (selon son identifiant contenant son activité, son niveau de priorité, etc.) à exercer un contrôle sur le terminal (3) mobile sur lequel est implantée cette étiquette (1) RFID, les moyens (42) de traitement de l'équipement (4) tiers permettent de décider du type de contrôle à exercer sur le terminal (3) mobile sur lequel est implantée l'étiquette (1) RFID et de décider de l'envoi d'au moins une instruction (10) de contrôle, grâce à des moyens de décision d'envoi d'instructions (10) de contrôle exécutables sur des moyens (30) de traitement de terminaux (3) mobiles. Les données définissant les équipements (4) tiers autorisés à exercer un contrôle sur le terminal (3) mobile, en fonction de données correspondant à des données contenues dans les identifiants des équipements (4) tiers (niveaux de priorité, activités, etc.), pourront avoir été enregistrées dans les moyens (22, 11) de mémorisation accessibles au terminal (3) mobile grâce à une étape préalable de configuration du terminal (3) mobile, comme expliqué plus loin. Ces paramètres de configuration définissant les équipements (4) tiers autorisés pourront être saisis par l'utilisateur du terminal (3) mobile et être modifiables à tout moment. Si la législation venait à évoluer dans ce sens, il pourrait être souhaitable que les utilisateurs de terminaux (3) mobiles ne puissent pas refuser le contrôle de leur terminal (3) mobile par certains équipements (4) tiers ou ne puissent pas modifier certaines données définissant certains équipements (4) tiers autorisés à contrôler leur terminal (3) mobile. Dans ce cas, certaines des données définissant les équipements (4) tiers autorisés à contrôler le terminal (3) mobile auront été enregistrées au préalable, par exemple, par les constructeurs de terminaux (3) mobiles, dans ces moyens (22, 11) de mémorisation. Ces données ne seront alors accessibles qu'en lecture, de façon à empêcher leur modification par les utilisateurs des terminaux (3) mobiles.

Les moyens (42) de traitement de l'équipement (4) tiers comportent également des moyens de création d'instructions (10) de contrôle de terminaux (3) mobiles qui permettent à un opérateur d'élaborer, grâce à des moyens de saisie et des moyens d'affichage de l'équipement (4) tiers, des instructions (10) de contrôle exécutables par un module de contrôle du fonctionnement des moyens (30) de traitement des terminaux (3) mobiles. Ces instructions (10) pourront consister en des fichiers électroniques élaborés dans différents langages de programmation adaptés aux différents types de terminaux (3) mobiles auxquels ils sont destinés à être envoyés, ces différents types de terminaux pouvant, par exemple, être connus à l'avance ou identifiés grâce à, par exemple, certaines des données contenues dans l'identifiant de l'étiquette (1) RFID. Quel que soit le type du terminal (3) mobile recevant l'instruction (10), le terminal (3) mobile selon l'invention comportera un module de contrôle de son fonctionnement, par exemple sous forme logicielle, permettant d'exécuter les instructions (10). Les moyens de création d'instructions (10) de contrôle de terminaux (3) mobiles permettent ensuite à l'opérateur d'enregistrer ces instructions (10) de contrôle dans des moyens (43) de mémorisation de l'équipement (4) tiers. Ces moyens (43) de mémorisation stockent au moins une base de données des utilisateurs de terminaux (3) mobiles pourvus d'une étiquette (1) RFID. L'identifiant de l'étiquette (1) RFID de certains utilisateurs aura été déclaré, au préalable, auprès de l'équipement (4) tiers et stocké dans cette base de données, pour l'authentification des identifiants des étiquettes (1) RFID implantées sur les terminaux (3) mobiles de ces utilisateurs et l'envoi d'instructions (10) vers leur terminal (3) mobile. Cette base de données contient, d'une part, une table de correspondance entre des données représentatives des identifiants déclarés et des données représentatives des différentes instructions (10) de contrôle à envoyer sur les terminaux (3) mobiles pourvus d'une étiquette (1) RFID dont l'identifiant est déclaré et, d'autre part, des données représentatives des différentes instructions (10) de contrôle à envoyer sur les terminaux (3) mobiles pourvus d'une étiquette (1) RFID dont l'identifiant est inconnu. La consultation de cette base de données permet donc la décision du contrôle à exercer sur les terminaux (3) mobiles par les moyens (42) de traitement de l'équipement (4) tiers, que les identifiants des étiquettes (1) RFID implantées sur ces terminaux (3) mobiles soient connus ou non. Les données représentatives des différentes instructions (10) de contrôle à envoyer aux différents terminaux (3) mobiles munis d'étiquettes (1) RFID pourront se référer à des instructions de contrôle stockées dans les moyens (43) de mémorisation de l'équipement (4) tiers et qui auront été élaborées au préalable, par exemple lors de la déclaration des utilisateurs auprès de l'équipement (4) tiers. Ces utilisateurs déclarés auront communiqué l'identifiant de l'étiquette (1) RFID des différents terminaux (3) mobiles dont ils souhaitent se servir dans le champ (R2) d'influence de l'équipement (4) tiers, ainsi que les types de terminaux sur lesquels sont implantées ces étiquettes (1) RFID. Ainsi, le gestionnaire de la base de données de l'équipement (4) tiers pourra y enregistrer des données représentatives d'instructions (10) de contrôle adaptées aux différents utilisateurs et à leurs terminaux (3) mobiles. Le gestionnaire de la base de données de l'équipement (4) tiers peut bien entendu être, par exemple, l'opérateur de téléphonie mobile fournissant le réseau de téléphonie mobile par lequel le terminal (3) mobile établit ses transmissions. Dans un autre exemple, le gestionnaire de la base de données de l'équipement (4) tiers pourra faire partie de l'équipement (4) tiers et recevoir ces informations nécessaires à la gestion de cette base de données des terminaux mobiles, soit directement du module de contrôle du fonctionnement des terminaux (3) mobiles lors de la première entrée de ces terminaux (3) mobiles dans ce champ (R2) d'influence, soit des différents opérateurs de téléphonie mobile fournissant les réseaux de téléphonie mobile par lesquels les terminaux (3) mobiles établissent leurs transmissions. Le gestionnaire de la base de données de l'équipement (4) tiers pourra, par exemple, également être le gestionnaire de l'identifiant de l'équipement (4) tiers. Il définira ainsi les valeurs des données contenues dans les différents champs de cet identifiant. Ainsi, selon les droits que possède l'équipement (4) tiers pour contrôler les terminaux (3) mobiles présents dans son champ (R2) d'influence, en fonction de la législation, le gestionnaire pourra définir les données qui doivent être inclues dans l'identifiant de l'équipement (4) tiers et les données auxquelles il devra accéder dans les moyens (22, 11) de mémorisation présents sur les terminaux (3) mobiles. Comme expliqué précédemment, dans un mode de réalisation, ces données stockées dans les moyens (22, 11) de mémorisation présents sur les terminaux (3) mobiles permettent à l'équipement (4) tiers, lorsqu'il reçoit ces données du terminal (3) mobile, de déterminer s'il est autorisé à exercer un contrôle sur ce terminal (3) mobile. Dans un autre mode de réalisation, lorsque l'équipement (4) tiers envoie son identifiant au terminal (3) mobile, ce dernier peut comparer cet identifiant de l'équipement (4) tiers à ces données stockées dans les moyens (22, 11) de mémorisation présents sur le terminal (3) mobile, pour déterminer si cet équipement (4) tiers est autorisé à contrôler ses moyens (30) de traitement.

Les moyens d'envoi de demandes d'identification des étiquettes RFID présentes dans le champ (R2) d'influence des moyens (41) de communication de l'équipement (4) tiers, sont activés en permanence de façon à envoyer cette demande d'identification en permanence. A la réception de cette demande d'identification, lorsque l'étiquette (1) RFID a déjà envoyé son identifiant à l'équipement (4) tiers, des moyens d'envoi de la dernière instruction (10) de contrôle exécutée par le terminal (3) mobile vers l'équipement (4) tiers, sont activés dans les étiquettes (1) RFID pour permettre à l'équipement (4) tiers d'obtenir une indication du contrôle exercé sur les terminaux (3) mobiles présents dans son champ (R2) d'influence. Les étiquettes (1) RFID comportent également des moyens de création d'au moins une instruction d'annulation de la dernière instruction (10) de contrôle exécutée par les moyens (30) de traitement du terminal (3) mobile. Ces moyens de création d'au moins une instruction d'annulation de la dernière instruction (10) de contrôle sont activés lorsque les étiquettes (1) RFID ne reçoivent plus de demande d'identification. Ainsi, les terminaux (3) mobiles sur lesquels elles sont implantées annuleront la dernière instruction qu'ils auraient exécutée lorsqu'ils étaient dans le champ (R2) d'influence de l'équipement (4) tiers et retourneront à un mode de fonctionnement normal. Donc, lorsque le possesseur d'un terminal (3) mobile pourvu d'une étiquette (1) RFID, selon l'invention, quitte le champ (R2) d'influence de l'équipement (4) tiers, son terminal (3) mobile retourne à un fonctionnement normal. Au cas où l'utilisateur d'un terminal (3) mobile selon l'invention quitte le champ (R2) d'influence de l'équipement (4) tiers alors que son terminal est éteint et qu'il ne peut donc plus annuler la dernière instruction exécutée, les moyens (30) de traitement du terminal (3) mobile comportent également des moyens d'annulation de la dernière instruction (10) de contrôle exécutée, ces moyens étant activés automatiquement lors de l'extinction ou de l'allumage du terminal (3) mobile et activables par l'utilisateur par sélection d'un menu spécifique. Ainsi, les terminaux (3) mobiles retournent automatiquement à un mode de fonctionnement normal, c'est-à-dire en absence de tout contrôle externe, et si un problème survient, l'utilisateur peut forcer son terminal à retrouver un mode de fonctionnement normal.

Dans un mode de réalisation de l'invention, les moyens (41) de communication de l'équipement (4) tiers comportent des moyens d'envoi, par fréquences radio, d'au moins une instruction (10) de contrôle du fonctionnement d'au moins un terminal (3) mobile. Ces moyens permettent l'envoi par fréquences radio d'instructions (10) de contrôle des moyens (30) de traitement de terminaux (3) mobiles pourvus d'étiquettes (1) RFID. Ces instructions (10) sont alors enregistrées dans des moyens (11) de mémorisation et de traitement de données des étiquettes (1) RFID. Les terminaux (3) mobiles sont pourvus d'un lecteur (32) RFID permettant aux moyens (30) de traitement des terminaux (3) mobiles de lire les instructions (10) enregistrées dans leur étiquette (1) RFID et d'exécuter ces instructions.Dans cet exemple d'envoi des instructions (10) par fréquence radio, l'équipement tiers peut consister en un terminal placé, par exemple, dans une salle de spectacle, un hôpital, une voiture ou un avion. Le terminal (3) mobile peut consister, par exemple, en un téléphone mobile dont l'utilisation doit être contrôlée. Selon le possesseur du terminal (3) mobile, les gestionnaires de l'équipement (4) tiers peuvent vouloir empêcher complètement l'utilisation du terminal (3) mobile ou simplement en limiter les fonctions, par exemple si les ondes émises par le terminal (3) mobile ne sont pas gênantes pour les dispositifs dans le champ (R2) d'influence de l'équipement (4) tiers. Par exemple, les responsables d'un hôpital autoriseront les médecins possesseurs de téléphones mobiles de s'en servir dans certaines zones de l'hôpital, éventuellement à condition que les téléphones mobiles soient mis en mode vibreur, mais interdiront l'utilisation des téléphones mobiles dans d'autres zones sensibles. De même un utilisateur de téléphone mobile possédant une voiture munie d'un équipement (4) tiers selon l'invention pourra souhaiter que son téléphone passe en mode mains libres dès qu'il monte dans sa voiture. L'équipement (4) tiers embarqué dans la voiture permettra d'activer automatiquement, par exemple, le décrochage automatique lors de la réception d'appel, permettant au conducteur de recevoir des appels tout en restant concentré sur la route. Par ailleurs, de manière avantageuse, la base de données de l'équipement (4) tiers permet de déclarer quelle étiquette (1) RFID, et donc quel terminal (3) mobile, présents dans son champ (R2) d'influence appartiennent au conducteur du véhicule, de façon à, par exemple, interdire l'utilisation de ce terminal (3) mobile du conducteur tout en permettant aux passagers du véhicule d'utiliser leur terminal (3) mobile. Au contraire, les responsables de la gestion d'avions pourront interdire l'utilisation de terminaux (3) mobiles, tels que des ordinateurs portables, des baladeurs ou des téléphones mobiles, dans l'enceinte des avions, même pour le personnel de bord. Selon les fonctions autorisées par les gestionnaires de l'équipement (4) tiers, les instructions (10) de contrôle envoyées permettront le contrôle du fonctionnement des terminaux (3) mobiles dans le champ (R2) d'influence de l'équipement (4) tiers, par exemple en mettant les téléphones mobiles de certains utilisateurs en mode mains libres, en mode vibreur, en mode appels en urgence seulement ou, par exemple en éteignant complètement les ordinateurs, les téléphones mobiles et baladeurs. De façon non exhaustive, les instructions (10) de contrôle exécutables sur les moyens (30) de traitement des terminaux (3) mobiles pourront consister en des instructions du type :
- maintien du terminal (3) mobile dans son mode de fonctionnement,
- interdiction de l'utilisation du terminal (3) mobile,
- extinction du terminal (3) mobile,
- mise en veille du terminal (3) mobile,
- mise en mode vibreur du terminal (3) mobile,
- mise en mode mains libres du terminal (3) mobile,
- mise en mode restreint aux appels en urgence du terminal (3) mobile.

Dans un autre mode de réalisation, les moyens (41) de communication de l'équipement (4) tiers permettent également une communication par téléphonie mobile avec des terminaux (3) mobiles, tels que, par exemple, des téléphones mobiles munis de moyens (35) de communication par téléphonie mobile tels qu'un module GSM (« Global System for Mobile communication », selon la terminologie anglaise) ou un module GPRS (« General Packet Radio Service », selon la terminologie anglaise) ou bien entendu tout autre module d'une quelconque technologie radio et une antenne (31) adaptée. Ces terminaux (3) mobiles munis de moyens (35) de communication par téléphonie mobile pourront également consister en des ordinateurs munis de cartes de communication par téléphonie mobile, telles que, par exemple, les cartes PCMCIA/GPRS (« Personal Computer Memory Card International Association / General Packet Radio Service », selon la terminologie anglaise), par exemple du type VMCC (pour l'anglais « Vodafone Mobile Connect Card »), par exemple de type 2G ou 3G, etc. Ces moyens (41) de communication par téléphonie mobile permettent alors à l'équipement (4) tiers d'envoyer les instructions (10) de contrôle directement aux terminaux (3) mobiles dont l'étiquette (1) RFID a été identifiée. Selon les accords entre les opérateurs de téléphonie mobile et les gestionnaires d'équipements (4) tiers, cette communication pourra, soit passer par un équipement opérateur qui transmet, de façon connue en soi, grâce à des moyens de transmission, les informations envoyées par l'équipement (4) tiers vers des moyens (35) de communication par téléphonie mobile du terminal (3) mobile, soit passer directement de l'équipement (4) tiers vers les moyens (35) de communication par téléphonie mobile du terminal (3) mobile, grâce à une autorisation préalable, par exemple, par l'opérateur, de l'émission par l'équipement (4) tiers de signaux du même type que ceux, par exemple, de l'opérateur. Dans ce cas, ces signaux consisteront en des signaux d'instructions (10) contrôlant les moyens (30) de traitement du terminal (3) mobile, par exemple, grâce à la technologie OTA (« Over The Air », selon la terminologie anglaise). Les instructions (10) de contrôle des moyens (30) de traitement des terminaux (3) mobiles seront donc envoyées, dans ce mode de réalisation, via au moins un réseau de téléphonie mobile utilisé par les terminaux (3) mobiles identifiés par fréquence radio grâce à leur étiquette (1) RFID. De manière avantageuse, le téléchargement, via la technologie OTA, des instructions (10) de contrôle vers les terminaux (3) mobiles, pourra se faire, par exemple, par tout moyen adapté, à la convenance de l'utilisateur. Ainsi, l'utilisateur pourra choisir entre, par exemple, soit un envoi d'un SMS (« Short Message Service », selon la terminologie anglaise) ou d'un MMS (« Multimédia Message Service », selon la terminologie anglaise) contenant les paramètres qu'il devra saisir sur son terminal (3) mobile pour en contrôler le fonctionnement, soit un envoi d'un message vocal lui énonçant les paramètres à saisir, soit un envoi d'une adresse de site Internet sur lequel il doit se connecter pour aller chercher les paramètres à saisir, soit un envoi direct des paramètres vers son terminal (3) mobile par la technologie OTA. Ces instructions (10) pourront naturellement consister en des instructions du même type que celles décrites précédemment. Dans ce mode de réalisation, le terminal (3) mobile comporte une carte (2) SIM accessible grâce à un lecteur (33) de carte SIM du terminal (3) mobile. La carte (2) SIM possèdent des moyens (22) de mémorisation de données pour l'enregistrement des instructions (10) envoyées par l'équipement (4) tiers. Les moyens (22) de mémorisation de données de la carte (2) SIM peuvent également stocker une application, par exemple de type « SIM Tool Kit », contrôlant les moyens (30) de traitement du terminal (3) mobile pour l'exécution des instructions (10) de contrôle envoyées par l'équipement (4) tiers. Dans cet exemple, cette application « SIM tool Kit » permettra également la configuration du terminal (3) mobile pour l'autorisation du contrôle externe de son fonctionnement, comme expliqué ci-dessous. Il est évident que les instructions (10) peuvent également être enregistrées dans tout autre moyen de mémorisation connu, présent dans les terminaux (3) mobiles tels que définis dans cette description. Par exemple, lorsque le terminal (3) mobile est un ordinateur portable muni de moyens (35) de communication par téléphonie mobile, l'application et les instructions peuvent, par exemple, être enregistrées directement sur le disque dur de l'ordinateur. Le module (2) électronique portable pourrait, dans cet exemple, ne pas être une carte SIM mais une carte mémoire, si l'évolution des standards le nécessitait.

Les moyens (30) de traitement du terminal (3) mobile comportent des moyens de configuration du terminal (3) mobile pour autoriser son contrôle externe par l'équipement (4) tiers. Ces moyens de configuration pourront, par exemple, être intégrés dans le module de contrôle du fonctionnement du terminal (3) mobile. Le terminal (3) mobile comporte des moyens (34) de saisie et d'affichage pour l'affichage de menus de saisie d'un code d'utilisation de l'étiquette (1) RFID et la saisie, par l'utilisateur du terminal (3) mobile, du code personnel d'autorisation du contrôle externe du terminal (3) mobile. Les moyens (30) de traitement du terminal (3) mobile permettent alors l'authentification du code saisi par l'utilisateur, par consultation de moyens (22) de mémorisation présents dans le terminal (3) mobile et stockant le code personnel d'autorisation du contrôle externe du terminal (3) mobile. Ce code personnel d'autorisation du contrôle externe du terminal (3) mobile pourra être associé, dans les moyens (22) de mémorisation présents dans le terminal (3) mobile, à l'identifiant de l'étiquette (1) RFID. Ainsi, le terminal (3) mobile autorise l'accès à un menu de sélection de son contrôle externe seulement si le code personnel saisi par l'utilisateur correspond à l'identifiant de l'étiquette (1) RFID présente dans le terminal (3) mobile. Si le code personnel et l'identifiant RFID ne correspondent pas, le terminal (3) mobile ne permettra pas l'accès au menu de sélection de choix d'autorisation ou de refus du contrôle externe du terminal (3) mobile. Les moyens (34) de saisie et d'affichage permettent également l'affichage de menus de sélection de choix, parmi au moins un choix d'autorisation du contrôle externe et un choix de refus du contrôle externe par des équipements (4) tiers, et la saisie, par l'utilisateur du terminal (3) mobile, d'au moins un choix d'autorisation ou de refus du contrôle externe du terminal (3) mobile. Ces moyens de configuration du terminal (3) mobile permettront, selon un mode de réalisation expliqué précédemment, de définir les différents équipements (4) tiers choisis par l'utilisateur comme étant autorisés à exercer un contrôle sur son terminal (3) mobile, en enregistrant, dans les moyens (22, 11) de mémorisation présents sur ce terminal (3) mobile, des données définissant ces équipements (4) tiers, selon différentes valeurs possibles des données contenues dans les différents champs de l'identifiant de l'équipement (4) tiers. Ces données enregistrées dans les moyens (22, 11) de mémorisation présents sur ce terminal (3) mobile pourront ainsi correspondre à des listes d'identifiants d'équipement (4) tiers ou des listes d'activités de tiers, etc. Les moyens (30) de traitement permettent la mise en attente du terminal (3) mobile d'au moins une instruction (10) de contrôle par un équipement (4) tiers lorsqu'un choix d'autorisation du contrôle externe a été saisi ou la mise en fonction normale, sans contrôle externe, lorsque le choix de refus du contrôle a été saisi. Cependant, selon un mode de réalisation indiqué précédemment, même si le choix de refus du contrôle a été saisi, les moyens (30) de traitement du terminal (3) mobile seront en attente d'une éventuelle instruction (10) en provenance d'un équipement (4) tiers prioritaire dont l'identifiant ne permet à l'utilisateur de décider s'il souhaite autoriser le contrôle de son terminal (3) mobile. Ce mode de réalisation permettrait, si la législation venait à évoluer dans ce sens, de permettre de définir des identifiants d'équipements (4) tiers prioritaires qui sont autorisés à décider du contrôle à exercer sur n'importe quel type de terminal (3) mobile présent dans leur champ (R2) d'influence, par exemple en cas de force majeure. Les moyens de configuration du terminal (3) mobile sont activables par les moyens (30) de traitement du terminal (3) mobile, à chaque initialisation du terminal (3) mobile et à la demande de l'utilisateur, grâce à un menu spécifique sur les moyens (34) de saisie et d'affichage du terminal (3) mobile. Le code personnel d'utilisation de l'étiquette (1) RFID pourra avoir été enregistré au préalable dans les moyens (22) de mémorisation présents dans le terminal (3) mobile, grâce à ces moyens de configuration du terminal (3) mobile, lors de la première activation de l'étiquette (1) RFID du terminal (3) mobile.

Le procédé selon l'invention nécessite une configuration (60) préalable du terminal (3) mobile par son utilisateur de façon à autoriser le contrôle externe du terminal (3) mobile par un équipement (4) tiers. Comme indiqué précédemment, ces étapes d'autorisation du contrôle externe du terminal (3) mobile peuvent être mises en oeuvre par une application de type « SIM Tool Kit », stockée sur une carte (2) SIM accessible grâce à un lecteur (33) de carte SIM du terminal (3) mobile et possédant des moyens (22) de mémorisation de données. Elles peuvent également être mises en oeuvre par une application stockée dans une carte mémoire accessible par un lecteur de carte mémoire ou par une application stockée dans des moyens de mémorisation directement dans le terminal (3) mobile. Cette application peut également être responsable de l'exécution des instructions par le terminal (3) mobile. De même, les instructions (10) pourront être enregistrées dans des moyens de mémorisation directement dans le terminal (3) mobile, au lieu d'être enregistrées dans les moyens de mémorisation du module (2) électronique portable, qu'il s'agisse d'une carte SIM ou d'une carte mémoire.

Pour la mise en oeuvre du procédé selon l'invention, une étape préalable de création d'instructions (10) de contrôle de terminaux (3) mobiles est nécessaire. Les moyens (42) de traitement de l'équipement (4) tiers, comportant des moyens de création d'instructions (10) de contrôle, permettent, par exemple, à un opérateur de réaliser cette étape en élaborant, grâce à des moyens de saisie et des moyens d'affichage de l'équipement (4) tiers, des instructions (10) de contrôle éxécutables sur les moyens (30) de traitement de terminaux (3) mobiles et en enregistrant ces instructions (10) de contrôle dans des moyens (43) de mémorisation de l'équipement (4) tiers contenant la base de données permettant de décider du type de contrôle à exercer sur les terminaux (3) mobiles munis d'étiquettes (1) RFID dont l'identifiant est connu ou non.

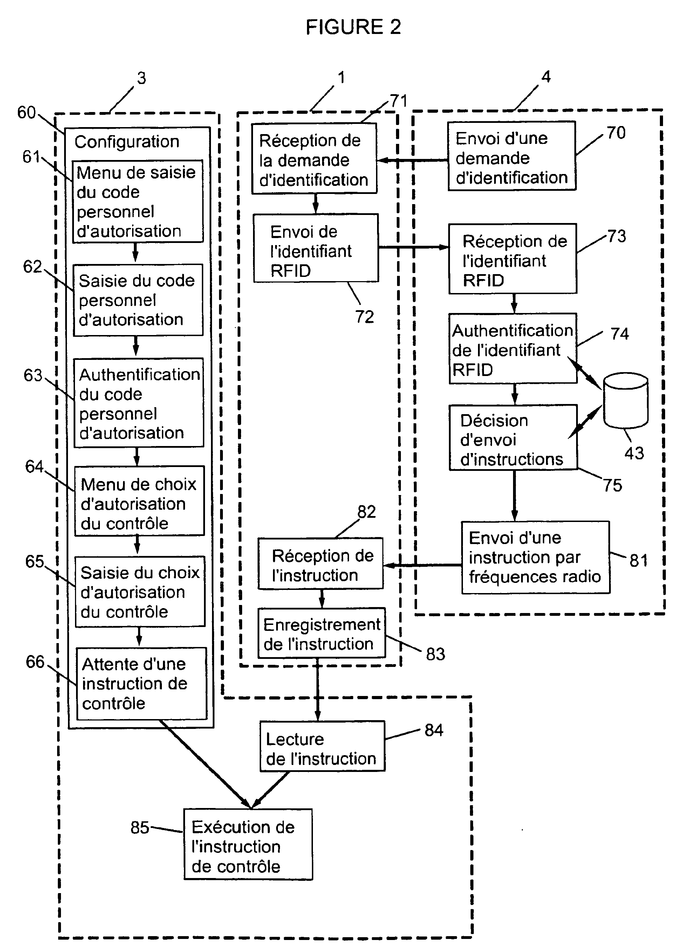

Un mode de réalisation du procédé selon l'invention va maintenant être décrit en référence à la figure 2. Les étapes de configuration (60) pour l'autorisation préalable du contrôle externe du terminal (3) mobile sont représentées sur la colonne de gauche sur la figure 2. Les moyens de traitement du terminal mobile permettent une étape d'affichage (61) d'un menu de saisie d'un code personnel d'autorisation du contrôle externe du terminal (3) mobile, puis de saisie (62) de ce code personnel par l'utilisateur du terminal (3) mobile, grâce à des moyens (34) de saisie et d'affichage du terminal (3) mobile. Ensuite, les moyens (30) de traitement du terminal (3) mobile réalisent une authentification (63) du code saisi par l'utilisateur, grâce à une consultation de moyens (22) de mémorisation présents, dans le module (2) électronique portable présent dans le terminal (3) mobile ou dans le terminal (3) mobile directement. A la première activation de l'étiquette (1) RFID du terminal (3) mobile, l'étape (61) affichage d'un menu de saisie d'un code RFID provoquera une étape d'enregistrement du code personnel d'autorisation du contrôle externe du terminal (3) mobile saisi par l'utilisateur, avec éventuellement une répétition de cette étape pour obtenir une confirmation de ce code qui sera alors enregistré comme code personnel RFID. Ce code pourra, selon le choix de l'utilisateur être indispensable à l'utilisation du terminal (3) mobile ou simplement nécessaire à l'utilisation des fonctions de contrôle externe par des équipement (4) tiers. Il pourra également, comme indiqué précédemment, être associé à l'identifiant de l'étiquette (1) RFID, dans les moyens (22) de mémorisation présents dans le terminal (3) mobile. Une fois ce code authentifié, l'affichage (64) d'un menu de sélection de choix permet à l'utilisateur d'autoriser ou non le contrôle de son terminal (3) mobile par certains équipements (4) tiers. Les choix pourront consister en au moins un choix d'autorisation du contrôle externe et un choix de refus du contrôle externe par des équipements (4) tiers. Les choix d'autorisation pourront consister en une pluralité de choix possibles tels que, par exemple, un choix entre un contrôle total ou un contrôle partiel ou encore un contrôle nécessitant une validation par l'utilisateur avant l'exécution d'instructions (10) par le terminal (3) mobile. Cette étape de décision de l'autorisation du contrôle du terminal (3) mobile par un équipement (4) tiers pourra, comme expliqué précédemment, être associée à une étape de sélection du ou des équipement(s) tiers autorisés à prendre le contrôle sur le terminal (3) mobile, parmi une liste d'équipements (4) tiers ou d'identifiants d'équipements (4) tiers enregistrés au préalable dans le terminal (3) mobile, dans le module (2) électronique portable présent dans le terminal (3) mobile ou dans l'étiquette (1) RFID, ou même dans le terminal (3) mobile directement. L'enregistrement des équipements (4) tiers autorisés à prendre le contrôle du terminal (3) mobile pourra être réalisé, par exemple, par envoi d'une liste d'équipements (4) tiers autorisés vers les terminaux mobiles selon l'invention, par exemple par la technologie OTA. Certaines des données représentant certains équipements (4) tiers autorisés à exercer un contrôle pourront être enregistrées de façon à n'être accessibles qu'en lecture, empêchant ainsi l'utilisateur de modifier les droits de contrôle de certains équipements tiers, si la législation le permet, comme indiqué précédemment. Dans cette variante, l'étiquette (1) RFID ou le module (2) électronique ou le terminal (3) mobile lui-même pourront, par exemple, être délivrés aux utilisateurs avec un paramétrage par défaut contenant certains paramètres définissant les équipements (4) tiers possédant des droits prioritaires. Ces paramètres pourront ne pas être modifiables par l'utilisateur, mais être éventuellement modifiables par un organisme agréé, tel qu'un opérateur de téléphonie mobile, par exemple. La saisie (65), par l'utilisateur, d'au moins un choix d'autorisation du contrôle externe du terminal (3) mobile, provoque la mise en attente (66) du terminal (3) mobile d'au moins une instruction (10) de contrôle par un équipement (4) tiers. La saisie du choix de refus du contrôle provoque la mise en fonction du terminal (3) mobile selon son mode de fonctionnement normal. Ces étapes de la configuration (60) du terminal (3) mobile peuvent être mises en oeuvre à chaque initialisation du terminal (3) mobile et peuvent également être mises en oeuvre sur demande de l'utilisateur du terminal (3) mobile par une étape de sélection d'un menu spécifique sur les moyens (34) de saisie et d'affichage du terminal (3) mobile.

Suite à cette configuration (60) du terminal (3) mobile par l'utilisateur, les moyens (30) de traitement du terminal (3) mobile sont en attente d'une instruction (10) à exécuter. Cette instruction sera reçue d'un équipement (4) tiers lorsque l'utilisateur entrera dans le champ (R2) d'influence des moyens (41) de communication de l'équipement (4) tiers qui effectuent une étape d'envoi (70) d'une demande d'identification des étiquettes RFID présentes dans son champ (R2) d'influence. A l'entrée du terminal (3) mobile pourvu de son étiquette (1) RFID dans le champ d'influence, la réception (71) de la demande d'identification par l'étiquette (1) RFID provoque sa réponse, par envoi (72) de son identifiant, grâce à des moyens (11) de mémorisation et de traitement de données et des moyens (12) de communication par fréquences radio de l'étiquette (1) RFID. La réception (73) de l'identifiant de l'étiquette (1) RFID par les moyens (41) de communication de l'équipement (4) tiers provoque l'activation des moyens d'authentification de l'équipement (4) tiers, pour l'authentification (74) de l'identifiant par les moyens (42) de traitement de l'équipement (4) tiers et la décision (75) d'envoi d'au moins une instruction (10) de contrôle du terminal (3) mobile associé à l'étiquette (1) RFID. L'étape d'authentification (74) de l'identifiant de l'étiquette (1) RFID est réalisée par les moyens (42) de traitement de l'équipement (4) tiers, grâce à au moins une étape de consultation, dans des moyens (43) de mémorisation de l'équipement (4) tiers, d'au moins une base de données des utilisateurs de terminaux (3) mobiles pourvus d'une étiquette (1) RFID dont l'identifiant a été déclaré auprès de l'équipement (4) tiers, grâce à une étape préalable de déclaration des identifiants des étiquettes (1) RFID. Comme mentionné précédemment, cette base de données contient, d'une part, une table de correspondance entre des données représentatives des identifiants déclarés et des données représentatives des différentes instructions (10) de contrôle à envoyer sur les terminaux (3) mobiles pourvus d'une étiquette (1) RFID dont l'identifiant est déclaré et, d'autre part, des données représentatives des différentes instructions (10) de contrôle à envoyer sur les terminaux (3) mobiles pourvus d'une étiquette (1) RFID dont l'identifiant est inconnu. Cette base de données peut également contenir des informations relatives aux terminaux (3) mobiles des utilisateurs et à des informations personnelles, etc. La consultation de cette base de données permet aux moyens (42) de traitement de l'équipement (4) tiers d'effectuer l'étape de décision (75) d'envoi d'au moins une instruction (10) permettant d'exercer un contrôle du fonctionnement des terminaux (3) mobiles. Cette instruction (10) devra être adaptée à l'utilisateur et l'envoi de l'instruction devra être adapté au type de son terminal (3) mobile qui sera connu grâce à cette base de données ou grâce à certaines données contenues dans l'identifiant de l'étiquette (1) RFID.

Dans le mode de réalisation du procédé représenté sur la figure 2, les moyens (41) de communication de l'équipement (4) tiers effectuent l'envoi (81) par fréquences radio d'au moins une instruction (10) de contrôle du fonctionnement des moyens (30) de traitement du terminal (3) mobile vers l'étiquette (1) RFID. A la réception (82) de l'instruction par les moyens (12) de communication par fréquences radio de l'étiquette (1) RFID, les moyens (11) de mémorisation et traitement de données de l'étiquette (1) RFID effectuent l'enregistrement (83) de l'instruction (10). Ensuite, le lecteur (32) RFID du terminal (3) mobile permet la lecture (84) de l'instruction pour que le module de contrôle du fonctionnement des moyens (30) de traitement du terminal (3) mobile exécutent (85) l'instruction (10). Comme indiqué précédemment, les moyens (41) de communication de l'équipement (4) tiers peuvent également comporter des moyens d'envoi des instructions (10) de contrôle du fonctionnement des terminaux (3) mobiles via au moins un réseau de téléphonie mobile. Ces moyens d'envoi des instructions (10) par un réseau de téléphonie mobile permettent la mise en oeuvre d'un autre mode de réalisation du procédé dans lequel les instructions (10) ne sont pas envoyées par l'équipement (4) opérateur directement vers l'étiquette (1) RFID mais sont envoyées vers des moyens (35) de communication par téléphonie mobile présent dans le terminal (3) mobile. Les instructions pourront, par exemple, être envoyées grâce à la technologie OTA, comme indiqué précédemment.

Comme expliqué précédemment, les étapes d'exécution (85) de l'instruction (10) par le module de contrôle du fonctionnement des moyens (30) de traitement du terminal (3) mobile, peuvent consister, par exemple, en l'une des étapes suivantes :
- maintien du terminal (3) mobile dans son mode de fonctionnement,
- interdiction de l'utilisation du terminal (3) mobile,
- extinction du terminal (3) mobile,
- mise en veille du terminal (3) mobile,
- mise en mode vibreur du terminal (3) mobile,
- mise en mode mains libres du terminal (3) mobile,
- mise en mode restreint aux appels en urgence du terminal (3) mobile.

Enfin, l'étape (70) d'envoi, par les moyens (41) de communication de l'équipement (4) tiers, d'une demande d'identification des étiquettes RFID présentes dans son champ (R2) d'influence, est répétée en permanence. De cette façon, elle permet de provoquer, lorsque l'étiquette (1) RFID a déjà envoyé son identifiant à l'équipement (4) tiers, une étape d'envoi de la dernière instruction (10) de contrôle exécutée par le terminal (3) mobile, vers l'équipement (4) tiers qui obtient ainsi une indication du contrôle exercé sur les terminaux (3) mobiles présents dans son champ (R2) d'influence. D'autre part, lorsque l'étiquette (1) RFID ne reçoit plus de demande d'identification, elle effectue une étape de création d'au moins une instruction d'annulation de la dernière instruction (10) de contrôle exécutée par le module de contrôle du fonctionnement des moyens (30) de traitement du terminal (3) mobile. Cette instruction permet alors au module de contrôle du fonctionnement des moyens (30) de traitement du terminal (3) mobile, d'effectuer cette annulation de la dernière instruction (10) exécutée, de façon à restaurer le terminal (3) mobile dans son mode de fonctionnement normal lorsqu'il sort du champ (R2) d'influence de l'équipement (4) tiers. Dans le même but, chaque étape d'extinction ou d'allumage du terminal (3) mobile provoque une étape d'annulation de la dernière instruction (10) de contrôle exécutée par le module de contrôle du fonctionnement des moyens (30) de traitement du terminal (3) mobile. Ainsi, le terminal (3) mobile est restauré dans son mode de fonctionnement normal à chaque initialisation ou à chaque demande de l'utilisateur par sélection d'un menu spécifique, même si l'utilisateur est sorti du champ (R2) d'influence de l'équipement (4) tiers pendant que son terminal (3) mobile était éteint.

On comprend que l'on a ainsi réalisé un système, un objet portable et un procédé d'autorisation de contrôle externe d'un terminal (3) mobile par un équipement (4) tiers permettant à l'équipement (4) tiers de prendre le contrôle du fonctionnement de terminaux (3) mobiles, dans une zone (R2) géographique restreinte sous le contrôle de l'équipement (4) tiers, en fonction d'identifiants des utilisateurs de ces terminaux mobiles (identifiants des étiquettes RFID) et permettant aux utilisateurs d'autoriser ou non le contrôle externe du terminal mobile par un équipement tiers contrôlant une zone géographique restreinte.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système d'autorisation de contrôle externe d'au moins un terminal (3) mobile pourvu d'un lecteur (32) RFID, par au moins un équipement (4) tiers, grâce à au moins une étiquette (1) d'identification par fréquences radio (RFID) comportant des moyens (11) de mémorisation et de traitement de données et des moyens (12) de communication par fréquences radio, l'étiquette (1) RFID est implantée sur le terminal (3) mobile présent dans un champ (R2) d'influence de l'équipement (4) tiers, **caractérisé en ce que** :
- le système est pourvu de moyens d'autorisation de la prise de contrôle du fonctionnement du terminal (3) mobile par l'équipement (4) tiers, ces moyens d'autorisation comportant au moins des données transmises entre l'étiquette (1) RFID et l'équipement (4) tiers et/ou réciproquement,
- le terminal (3) mobile est pourvu d'un module de contrôle du fonctionnement de moyens (30) de traitement du terminal (3) mobile, agencé pour l'exécution d'au moins une instruction (10) de contrôle du terminal (3) mobile par l'équipement (4) tiers autorisé, en fonction d'identifiants de l'étiquette (1) RFID de l'utilisateur de ce terminal (3) mobile, cette instruction (10) étant élaborée et envoyée par un équipement (4) tiers autorisé, ce dernier possédant, d'une part, des moyens (41) de communication avec des étiquettes (1) RFID présentes dans son champ (R2) d'influence et, d'autre part, des moyens (42) de traitement comportant des moyens d'authentification des identifiants d'étiquettes (1) RFID, des moyens de décision d'envoi d'instructions (10) de contrôle exécutables par les modules de contrôle du fonctionnement des moyens (30) de traitement de terminaux (3) mobiles.

2. Système selon la revendication 1, **caractérisé en ce que** les moyens (42) de traitement de l'équipement (4) tiers comportent des moyens de création d'instructions (10) de contrôle de terminaux (3) mobiles, ces moyens de création permettant d'élaborer, grâce à des moyens de saisie et des moyens d'affichage de l'équipement (4) tiers, des instructions (10) de contrôle exécutables par les modules de contrôle du fonctionnement des moyens (30) de traitement de terminaux (3) mobiles et d'enregistrer ces instructions (10) de contrôle dans des moyens (43) de mémorisation de l'équipement (4) tiers.

3. Système selon une des revendications 1 et 2, **caractérisé en ce que** les moyens d'autorisation de la prise de contrôle du fonctionnement du terminal (3) mobile par l'équipement (4) tiers comportent soit au moins un identifiant de l'équipement (4) tiers et des données définissant les équipements (4) tiers autorisés à prendre le contrôle du terminal (3) mobile, soit au moins un identifiant de l'étiquette (1) RFID de l'utilisateur de ce terminal (3) mobile et des instructions de contrôle associées à ces identifiants de l'étiquette (1) RFID dans des moyens (43) de mémorisation de l'équipement (4) tiers, soit au moins un identifiant de l'étiquette (1) RFID de l'utilisateur de ce terminal (3) mobile et des données définissant les équipements (4) tiers autorisés à prendre le contrôle du terminal (3) mobile.

4. Système selon une des revendications 2 et 3, **caractérisé en ce que** les moyens de création d'instructions (10) de contrôle de terminaux (3) mobiles, implémentés dans les moyens (42) de traitement de l'équipement (4) tiers, comportent des moyens d'associer aux instructions (10) un identifiant de l'équipement (4) tiers permettant aux moyens (30) de traitement du terminal (3) mobile d'identifier l'équipement (4) tiers, par consultation de moyens (22) de mémorisation présents dans le terminal (3) mobile stockant une liste d'équipement (4) tiers autorisés à exercer un contrôle sur le terminal (3) mobile, cette authentification permettant d'autoriser le contrôle du terminal (3) mobile par l'équipement (4) tiers.

5. Système selon une des revendications 1 à 4, **caractérisé en ce que** les moyens (43) de mémorisation de l'équipement (4) tiers stockent au moins une base de données des utilisateurs de terminaux (3) mobiles pourvus d'une étiquette (1) RFID dont l'identifiant a été déclaré, au préalable, auprès de l'équipement (4) tiers et stocké dans cette base de données, pour l'authentification des identifiants des étiquettes (1) RFID implantées sur les terminaux (3) mobiles des utilisateurs et la décision du contrôle à exercer les terminaux (3) mobiles, cette base de données contenant, d'une part, une table de correspondance entre chacune des données représentatives des identifiants déclarés et au moins une donnée représentative des différentes instructions (10) correspondant au contrôle à exercer et à envoyer sur le terminal (3) mobile dont l'identifiant de l'étiquette (1) RFID est déclaré et, d'autre part, des données représentatives des différentes instructions (10) de contrôle à envoyer sur les terminaux (3) mobiles pourvus d'une étiquette (1) RFID dont l'identifiant est inconnu.

6. Système selon une des revendications 1 à 5, **caractérisé en ce que** les moyens (41) de communication de l'équipement (4) tiers comportent des moyens d'envoi, par fréquences radio, d'au moins une instruction (10) de contrôle du fonctionnement d'au moins un terminal (3) mobile, vers au moins une étiquette (1) RFID présente dans le champ (R2) d'influence des fréquences radio de l'équipement (4) tiers et implantée sur le terminal (3) mobile dont le lecteur (32) RFID permet de lire l'instruction reçue par les moyens (12) de communication par fréquences radio de l'étiquette (1) RFID et enregistrée dans les moyens (11) de mémorisation et traitement de données de l'étiquette (1) RFID, le module de contrôle du fonctionnement des moyens (30) de traitement du terminal (3) mobile permettant d'exécuter l'instruction lue par le lecteur (32) RFID.

7. Système selon une des revendications 1 à 6, **caractérisé en ce que** les moyens de création d'instructions (10) de contrôle présents dans les moyens (42) de traitement de l'équipement (4) tiers permettent à l'équipement (4) tiers d'élaborer des instructions (10) de contrôle dont l'exécution par le module de contrôle du fonctionnement des moyens (30) de traitement du terminal (3) mobile, aboutit à au moins un paramétrage du terminal (3) mobile, par enregistrement d'au moins un des paramètres suivants dans une mémoire du terminal (3) mobile stockant ses paramètres de configuration :
- maintien du terminal (3) mobile dans son mode de fonctionnement,
- interdiction de l'utilisation du terminal (3) mobile,
- extinction du terminal (3) mobile,
- mise en veille du terminal (3) mobile,
- mise en mode vibreur du terminal (3) mobile,
- mise en mode restreint aux appels en urgence du terminal (3) mobile.

8. Système selon une des revendications 1 à 7, **caractérisé en ce que** les moyens d'envoi de demandes d'identification des étiquettes RFID présentes dans le champ (R2) d'influence des moyens (41) de communication de l'équipement (4) tiers, sont activés en permanence de façon à envoyer cette demande d'identification en permanence, l'étiquette (1) RFID comportant, d'une part, des moyens d'envoi de la dernière instruction (10) de contrôle exécutée par le terminal (3) mobile vers l'équipement (4) tiers, ces moyens étant activés à la réception de la demande d'identification, après envoi de l'identifiant de l'étiquette (1) RFID à l'équipement (4) tiers, pour permettre à ce dernier d'obtenir une indication du contrôle exercé sur les terminaux (3) mobiles présents dans son champ (R2) d'influence et, d'autre part, des moyens de création d'au moins une instruction d'annulation de la dernière instruction (10) de contrôle exécutée par les moyens (30) de traitement du terminal (3) mobile, ces moyens étant activés lorsque l'étiquette (1) RFID ne reçoit plus de demande d'identification, pour permettre un retour du terminal (3) mobile à un mode de fonctionnement normal.

9. Terminal (3) mobile d'autorisation de contrôle externe, comportant un lecteur (32) RFID permettant d'accéder aux informations stockées dans au moins une étiquette (1) d'identification par fréquences radio (RFID) de l'utilisateur de ce terminal (3) mobile, l'étiquette (1) RFID comportant des moyens (11) de mémorisation et de traitement de données et des moyens (12) de communication par fréquences radio, **caractérisé en ce que**, d'une part, le terminal (3) mobile est pourvu de l'étiquette (1) RFID lui fournissant des moyens d'autorisation de la prise de contrôle du fonctionnement du terminal (3) mobile par un équipement (4) tiers dans le champ (R2) d'influence duquel le terminal (3) mobile se trouve, ces moyens d'autorisation comportant au moins des données transmises entre l'étiquette (1) RFID et l'équipement (4) tiers et/ou réciproquement et, d'autre part, le terminal (3) mobile comporte un module de contrôle du fonctionnement de moyens (30) de traitement du terminal (3) mobile, agencé pour exécuter, en fonction d'identifiants de l'étiquette (1) RFID de l'utilisateur de ce terminal (3) mobile, au moins une instruction (10) de contrôle du terminal (3) mobile par l'équipement (4) tiers autorisé

10. Terminal (3) mobile selon la revendication 9, **caractérisé en ce que** les moyens d'autorisation de la prise de contrôle du fonctionnement du terminal (3) mobile par un équipement (4) tiers comportent soit au moins un identifiant de l'équipement (4) tiers et des données définissant les équipements (4) tiers autorisés à prendre le contrôle du terminal (3) mobile, stockées dans des moyens (22, 11) de mémorisation accessibles au terminal (3) mobile, soit des moyens pour envoyer un identifiant de l'étiquette RFID afin de déterminer les instructions de contrôle associées à ces identifiants de l'étiquette (1) RFID dans des moyens (43) de mémorisation de l'équipement (4) tiers, soit au moins un identifiant de l'étiquette (1) RFID de l'utilisateur de ce terminal (3) mobile et des données définissant les équipements (4) tiers autorisés à prendre le contrôle du terminal (3) mobile, stockées dans des moyens (22, 11) de mémorisation accessibles au terminal (3) mobile.

11. Terminal (3) mobile selon une des revendications 9 et 10, **caractérisé en ce que** les moyens (30) de traitement du terminal (3) mobile comportent des moyens de configuration du terminal (3) mobile pour autoriser son contrôle externe par un équipement (4) tiers, le terminal (3) mobile comportant des moyens (34) de saisie et d'affichage pour, d'une part, l'affichage d'un menu de saisie d'un code personnel autorisant l'accès à un menu de sélection d'un choix, parmi au moins un choix d'autorisation du contrôle externe et un choix de refus du contrôle externe par des équipements (4) tiers, et, d'autre part, la saisie, par l'utilisateur du terminal (3) mobile, du code personnel d'autorisation de l'accès au menu de sélection d'un choix et d'au moins un choix d'autorisation ou de refus du contrôle externe du terminal (3) mobile, les moyens (30) de traitement du terminal (3) mobile permettant également l'authentification, d'une part, de l'identifiant de l'étiquette (1) RFID lue par le lecteur (32) RFID du terminal (3) mobile et, d'autre part, du code personnel saisi par l'utilisateur, par consultation de moyens (22) de mémorisation présents dans le terminal (3) mobile, puis, le cas échéant, la mise en attente du terminal (3) mobile d'au moins une instruction (10) de contrôle par un équipement (4) tiers lorsqu'un choix d'autorisation du contrôle externe a été saisi.

12. Terminal (3) mobile selon une des revendications 9 à 11, **caractérisé en ce que** les moyens de configuration du terminal (3) mobile sont activables par les moyens (30) de traitement du terminal (3) mobile, à chaque initialisation du terminal (3) mobile et à la demande de l'utilisateur, grâce à un menu spécifique, sur les moyens (34) de saisie et d'affichage du terminal (3) mobile.

13. Terminal (3) mobile selon une des revendications 9 à 12, **caractérisé en ce que** les moyens de configuration du terminal (3) mobile comportent des moyens d'enregistrement, dans les moyens (22) de mémorisation présents dans le terminal (3) mobile, du code personnel d'autorisation d'accès au menu de sélection d'un choix de contrôle externe du terminal (3) mobile, saisi par l'utilisateur lors de la première autorisation de contrôle externe du terminal (3) mobile, ce code personnel étant enregistré en correspondance avec l'identifiant de l'étiquette (1) RFID lu par le lecteur (32) RFID et enregistré dans les moyens (22) de mémorisation présents dans le terminal (3) mobile, lors de la première autorisation de contrôle externe du terminal (3) mobile.

14. Terminal (3) mobile selon une des revendications 9 à 13, **caractérisé en ce qu'**il comporte un module électronique portable consistant en une carte (2) SIM accessible grâce à un lecteur (33) de carte SIM du terminal (3) mobile et possédant des moyens (22) de mémorisation de données dans lesquels est stocké le module de contrôle du fonctionnement du terminal (3) mobile, ce module consistant en une application outil enregistrable dans la carte (2) SIM, dite application « SIM Tool Kit », contrôlant les moyens (30) de traitement du terminal (3) mobile pour l'exécution des instructions (10) de contrôle envoyées par l'équipement (4) tiers et permettant la configuration du terminal (3) mobile pour l'autorisation du contrôle externe de son fonctionnement.

15. Terminal selon une des revendications 9 à 14, **caractérisé en ce que** les moyens (30) de traitement du terminal (3) mobile comportent des moyens d'annulation de la dernière instruction (10) de contrôle exécutée, ces moyens étant activés automatiquement lors de l'extinction ou de l'allumage du terminal (3) mobile et activables par l'utilisateur par sélection d'un menu spécifique.

16. Module (2) électronique portable d'autorisation de contrôle externe, pour le contrôle externe d'au moins un terminal (3) mobile par au moins un équipement (4) tiers pourvu de moyens (41) de communication avec au moins une étiquette (1) d'identification par fréquences radio (RFID) implantée sur le terminal (3) mobile présent dans le champ (R2) d'influence de l'équipement (4) tiers, **caractérisé en ce que**, d'une part, une étiquette (1) RFID est implantée sur le module (2) électronique portable et fournit des moyens d'autorisation de la prise de contrôle du fonctionnement du terminal (3) mobile par un équipement (4) tiers dans le champ (R2) d'influence duquel le terminal (3) mobile se trouve, ces moyens d'autorisation comportant au moins des données transmises entre l'étiquette (1) RFID et l'équipement (4) tiers et/ou réciproquement et, d'autre part, le module (2) électronique portable possède des moyens (22) de mémorisation accessibles par un lecteur (33) du terminal (3) mobile, ces moyens (22) de mémorisation stockant un module de contrôle du fonctionnement du terminal (3) mobile, ce module consistant en une application agencée pour l'exécution, en fonction d'identifiants de l'étiquette (1) RFID de l'utilisateur de ce terminal (3) mobile, d'au moins une instruction (10) de contrôle du terminal (3) mobile par l'équipement (4) tiers autorisé.

17. Module (2) électronique portable selon la revendication 16, **caractérisé en ce que** les moyens d'autorisation de la prise de contrôle du fonctionnement du terminal (3) mobile par un équipement (4) tiers comportent soit au moins un identifiant de l'équipement (4) tiers et des données définissant les équipements (4) tiers autorisés à prendre le contrôle du terminal (3) mobile, stockées dans des moyens (22, 11) de mémorisation accessibles au terminal (3) mobile, soit des moyens pour envoyer un identifiant de l'étiquette RFID afin de déterminer les instructions de contrôle associées à ces identifiants de l'étiquette (1) RFID dans des moyens (43) de mémorisation de l'équipement (4) tiers, soit au moins un identifiant de l'étiquette (1) RFID de l'utilisateur de ce terminal (3) mobile et des données définissant les équipements (4) tiers autorisés à prendre le contrôle du terminal (3) mobile, stockées dans des moyens (22, 11) de mémorisation accessibles au terminal (3) mobile

18. Module (2) électronique portable selon une des revendications 16 et 17, **caractérisé en ce que** les instructions (10) de contrôle du terminal (3) mobile sont extraites de moyens (43) de mémorisation de l'équipement (4) tiers, en fonction de l'identifiant de l'étiquette (1) RFID, puis envoyées à l'étiquette (1) RFID grâce aux moyens (41) de communication par fréquences radio de l'équipement (4) tiers et sont lues par les moyens (30) de traitement du terminal (3) mobile grâce à un lecteur (32) RFID.

19. Module (2) électronique portable selon une des revendications 16 à 18, **caractérisé en ce qu'**il consiste en une carte (2) SIM, l'application stockée dans ses moyens (22) de mémorisation consistant en une application outil enregistrable dans la carte (2) SIM, dite application « SIM tool kit », et le terminal (3) mobile consistant en un téléphone mobile muni d'un lecteur (33) de carte SIM.

20. Module (2) électronique portable selon une des revendications 16 à 18, **caractérisé en ce qu'**il consiste en un circuit (2) intégré comportant une mémoire, l'application stockée dans ses moyens (22) de mémorisation consistant en une application d'exécution des instructions (10) de contrôle sur des terminaux (3) mobiles munis d'un lecteur (33) de carte mémoire.

21. Procédé d'autorisation de contrôle externe d'au moins un terminal (3) mobile par au moins une instruction (10) de contrôle, exécutable par un module de contrôle du fonctionnement des moyens (30) de traitement du terminal (3) mobile et élaborée grâce à des moyens (42) de traitement d'au moins un équipement (4) tiers pourvu de moyens (41) de communication avec au moins une étiquette (1) d'identification par fréquences radio (RFID) implantée sur le terminal (3) mobile présent dans le champ (R2) d'influence de l'équipement (4) tiers, **caractérisé en ce qu'**il comporte les étapes suivantes :
- autorisation de la prise de contrôle du fonctionnement du terminal (3) mobile par un équipement (4) tiers dans le champ (R2) d'influence duquel le terminal (3) mobile se trouve, au moins par l'intermédiaire de données transmises entre l'étiquette (1) RFID et l'équipement (4) tiers et/ou réciproquement,
- création préalable d'instructions (10) de contrôle de terminaux (3) mobiles, grâce aux moyens (42) de traitement de l'équipement (4) tiers comportant des moyens de création d'instructions (10) de contrôle permettant d'élaborer, grâce à des moyens de saisie et des moyens d'affichage de l'équipement (4) tiers, des instructions (10) de contrôle exécutables par un module de contrôle du fonctionnement des moyens (30) de traitement de terminaux (3) mobiles et d'enregistrer ces instructions (10) de contrôle dans des moyens (43) de mémorisation de l'équipement (4) tiers,
- envoi (70), par les moyens (41) de communication de l'équipement (4) tiers, d'une demande d'identification des étiquettes RFID présentes dans soin champ (R2) d'influence,
- réception (71) de la demande d'identification par des moyens (12) de communication par fréquences radio de l'étiquette (1) RFID, puis envoi (72) de son identifiant contenu dans des moyens (11) de mémorisation et de traitement de données de l'étiquette (1) RFID,
- réception (73) de l'identifiant de l'étiquette (1) RFID par les moyens (41) de communication de l'équipement (4) tiers,
- authentification (74) de l'identifiant par les moyens (42) de traitement de l'équipement (4) tiers et décision (75) d'envoi d'au moins une instruction (10) de contrôle du terminal (3) mobile associé à l'étiquette (1) RFID.

22. Procédé selon la revendication 21, **caractérisé en ce que** l'étape d'autorisation de la prise de contrôle du fonctionnement du terminal (3) mobile par l'équipement (4) tiers comporte :
- soit une étape d'envoi, par l'équipement (4) tiers vers l'étiquette (1) RFID, d'au moins un identifiant de l'équipement (4) tiers puis de comparaison, par le module de contrôle, de cet identifiant avec des données définissant les équipements (4) tiers autorisés à prendre le contrôle du terminal (3) mobile, stockées dans des moyens (22, 11) de mémorisation accessibles au terminal (3) mobile,
- soit une étape d'envoi, par l'étiquette (1) RFID vers l'équipement (4) tiers, d'au moins un identifiant de l'étiquette (1) RFID de l'utilisateur de ce terminal (3) mobile puis de consultation, par l'équipement (4) tiers, d'instructions de contrôle associées à ces identifiants de l'étiquette (1) RFID dans des moyens (43) de mémorisation de l'équipement (4) tiers,
- soit une étape d'envoi, par l'étiquette (1) RFID vers l'équipement (4) tiers, d'au moins un identifiant de l'étiquette (1) RFID de l'utilisateur de ce terminal (3) mobile et d'envoi, par le terminal (3) mobile, via l'étiquette (1) RFID, vers l'équipement. (4) tiers, de données définissant les équipements (4) tiers autorisés à prendre le contrôle du terminal (3) mobile, stockées dans des moyens (22, 11) de mémorisation accessibles au terminal (3) mobile, puis comparaison, par l'équipement (4) tiers, de cet identifiant avec ces données.

23. Procédé selon une des revendications 21 et 22, **caractérisé en ce que** l'étape d'authentification (74) de l'identifiant de l'étiquette (1) RFID est réalisée par les moyens (42) de traitement de l'équipement (4) tiers, grâce à au moins une étape de consultation, dans des moyens (43) de mémorisation de l'équipement (4) tiers, d'au moins une base de données des utilisateurs de terminaux (3) mobiles pourvus d'une étiquette (1) RFID dont l'identifiant a été déclaré auprès de l'équipement (4) tiers, grâce à une étape préalable de déclaration des identifiants des étiquettes (1) RFID, cette base de données contenant, d'une part, une table de correspondance entre des données représentatives des identifiants déclarés et des données représentatives des différentes instructions (10) de contrôle à envoyer sur les terminaux (3) mobiles pourvus d'une étiquette (1) RFID dont l'identifiant est déclaré et, d'autre part, des données représentatives des différentes instructions (10) de contrôle à envoyer sur les terminaux (3) mobiles pourvus d'une étiquette (1) RFID dont l'identifiant est inconnu, la consultation de cette base de données permettant aux moyens (42) de traitement de l'équipement (4) tiers d'effectuer l'étape de décision (75) d'envoi d'au moins une instruction (10) permettant d'exercer un contrôle du fonctionnement des terminaux (3) mobiles.

24. Procédé selon une des revendications 21 à 23, **caractérisé en ce que** l'envoi d'au moins une instruction (10) de contrôle du fonctionnement des moyens (30) de traitement du terminal (3) mobile consistent en les étapes suivantes :
- envoi (81) par fréquences radio, par les moyens (41) de communication de l'équipement (4) tiers, vers l'étiquette (1) RFID, d'au moins une instruction (10) de contrôle du fonctionnement des moyens (30) de traitement du terminal (3) mobile,
- réception (82) de l'instruction par les moyes (12) de communication par fréquences radio de l'étiquette (1) RFID et enregistrement (83) de l'instruction dans les moyens (11) de mémorisation et traitement de données de l'étiquette (1) RFID,
- lecture (84) de l'instruction, par un lecteur (32) RFID du terminal (3) mobile et exécution (85) de l'instruction par les moyens (30) de traitement du terminal (3) mobile.

25. Procédé selon une des revendications 21 à 24, **caractérisé en ce que** les étapes d'envoi d'au moins une instruction permettant d'exercer le contrôle du fonctionnement du terminal (3) mobile, provoquent l'exécution (85) de l'instruction par les moyens (30) de traitement du terminal (3) mobile, cette exécution (85) consistant en au moins une étape d'enregistrement, dans le terminal (3) mobile, d'au moins un paramètre parmi les paramètres suivants :
- maintien du terminal (3) mobile dans son mode de fonctionnement,
- interdiction de l'utilisation du terminal (3) mobile,
- extinction du terminal (3) mobile,
- mise en veille du terminal (3) mobile,
- mise en mode vibreur du terminal (3) mobile,
- mise en mode restreint aux appels en urgence du terminal (3) mobile.

26. Procédé selon une des revendications 21 à 25, **caractérisé en ce que** le contrôle externe du terminal (3) mobile par l'équipement (4) tiers nécessite une configuration (60) préalable du terminal (3) mobile par son utilisateur, grâce à la mise en oeuvre des étapes suivantes :
- affichage (61) d'un menu de saisie d'un code personnel d'autorisation de contrôle externe du terminal (3) mobile, puis saisie (62) de ce code personnel par l'utilisateur du terminal (3) mobile, grâce à des moyens (34) de saisie et d'affichage du terminal (3) mobile,
- authentification (63) du code personnel saisi par l'utilisateur, par les moyens (30) de traitement du terminal (3) mobile, par consultation de moyens (22) de mémorisation présents dans le terminal (3) mobile,
- affichage (64) d'un menu de sélection de choix, parmi au moins un choix d'autorisation du contrôle externe et un choix de refuse du contrôle externe par des équipements (4) tiers, puis saisie (65), par l'utilisateur, d'au moins un choix d'autorisation du contrôle externe du terminal (3) mobile,
- attente (66) du terminal (3) mobile d'au moins une instruction (10) de contrôle par un équipement (4) tiers.

27. Procédé selon la revendication 26, **caractérisé en ce que** les étapes de la configuration (60) du terminal (3) mobile sont mises en oeuvre à chaque initialisation du terminal (3) mobile et peuvent également être mises en oeuvre sur demande de l'utilisateur du terminal (3) mobile par une étape de sélection d'un menu spécifique sur les moyens (34) de saisie et d'affichage du terminal (3) mobile.

28. Procédé selon une des revendications 26 et 27, **caractérisé en ce que** la première activation de l'étiquette (1) RFID du terminal (3) mobile lors de l'étape (61) affichage d'un menu de saisie d'un code RFID consiste en une étape d'enregistrement du code personnel d'autorisation de contrôle externe du terminal (3) mobile, saisi par l'utilisateur lors de cette première activation, dans les moyens (22) de mémorisation présents dans le terminal (3) mobile, cette étape d'enregistrement étant accompagnée d'une étape d'enregistrement de l'identifiant de l'étiquette (1) RFID en correspondance avec le code personnel saisi, dans les moyens (22) de mémorisation présents dans le terminal (3) mobile.

29. Procédé selon une des revendications 21 à 28, **caractérisé en ce que** les étapes d'autorisation du contrôle externe du terminal (3) mobile sont mises en oeuvre par un module de contrôle du fonctionnement du terminal (3) mobile consistant en une application outil enregistrable dans la carte (2) SIM, dite application « SIM Tool Kit », stockée sur une carte (2) SIM accessible grâce à un lecteur (33) de carte SIM du terminal (3) mobile et possédant des moyens (22) de mémorisation de données, l'application contrôlant les moyens (30) de traitement du terminal (3) mobile pour l'exécution des instructions (10) de contrôle envoyées par l'équipement (4) tiers et permettant la configuration du terminal (3) mobile pour l'autorisation du contrôle externe de son fonctionnement.

30. Procédé selon une des revendications 21 à 29, **caractérisé en ce que** l'étape (70) d'envoi, par les moyens (41) de communication de l'équipement (4) tiers, d'une demande d'identification des étiquettes RFID présentes dans son champ (R2) d'influence, est répétée en permanence de façon à provoquer, d'une part, lorsque l'étiquette (1) RFID a déjà envoyé son identifiant à l'équipement (4) tiers, une étape d'envoi de la dernière instruction (10) de contrôle exécutée par le terminal (3) mobile, vers l'équipement (4) tiers qui obtient ainsi une indication du contrôle exercé sur les terminaux (3) mobiles présents dans son champ (R2) d'influence et, d'autre part, lorsque l'étiquette (1) RFID ne reçoit plus de demande d'identification, une étape de création, par l'étiquette (1) RFID, d'au moins une instruction d'annulation de la dernière instruction (10) de contrôle exécutée par les moyens (30) de traitement du terminal (3) mobile, suivie d'une étape d'exécution, par les moyens (30) de traitement du terminal (3) mobile, de cette annulation de la dernière instruction (10) exécutée.

31. Procédé selon une des revendications 21 à 30, **caractérisé en ce qu'**une étape d'extinction ou d'allumage du terminal (3) mobile provoque une étape d'annulation de la dernière instruction (10) de contrôle exécutée par les moyens (30) de traitement du terminal (3) mobile.

32. Procédé selon une des revendications 21 à 31, **caractérisé en ce que** l'étape (70) d'envoi, par les moyens (41) de communication de l'équipement (4) tiers, d'une demande d'identification des étiquettes RFID présentes dans son champ (R2) d'influence, est accompagnée de l'envoi d'un identifiant de l'équipement (4) tiers, suivie d'une étape d'authentification de cet identifiant de l'équipement (4) tiers par le terminal (3) mobile, par consultation de moyens (22) de mémorisation présents dans le terminal (3) mobile.

## Claims

1. Authorisation system for external control of at least one mobile terminal (3) provided with an RFID reader (32), by at least one piece of third-party equipment (4), using at least one radio-frequency identification (RFID) tag (1) including data storage and processing means (11) and radio-frequency communication means (12), the RFID tag (1) is installed in the mobile terminal (3) present in an influence field (R2) of the third-party equipment (4),
**characterised in that**:
- the system is provided with means for authorising the taking of control of the operation of the mobile terminal (3) by the third-party equipment (4), these authorisation means including at least data transmitted between the RFID tag (1) and the third-party equipment (4) and/or vice versa,
- the mobile terminal (3) is provided with a module for controlling the operation of processing means (30) of the mobile terminal (3), set up for the execution of at least one instruction (10) for control of the mobile terminal (3) by the authorised third-party equipment (4), as a function of identifiers of the RFID tag (1) of the user of this mobile terminal (3), this instruction (10) being prepared and sent by authorised third-party equipment (4), the latter having, on the one hand, means (41) of communication with RFID tags (1) present in its influence field (R2) and, on the other hand, processing means (42) including means for authenticating the identifiers of RFID tags (1), decision-making means for sending control instructions (10) executable by the modules for controlling the operation of the processing means (30) of mobile terminals (3).

2. System according to Claim 1, **characterised in that** the processing means (42) of the third-party equipment (4) include means for creating instructions (10) to control mobile terminals (3), these creation means making it possible, by using data entry means and display means of the third-party equipment (4), to prepare control instructions (10) executable by the modules for controlling the operation of the processing means (30) of mobile terminals (3) and to record these control instructions (10) in storage means (43) of the third-party equipment (4).

3. System according to one of Claims 1 and 2, **characterised in that** the means for authorising the taking of control of the operation of the mobile terminal (3) by the third-party equipment (4) include either at least one identifier of the third-party equipment (4) and data defining the third-party equipment (4) authorised to take control of the mobile terminal (3), or at least one identifier of the RFID tag (1) of the user of this mobile terminal (3) and control instructions associated with these identifiers of the RFID tag (1) in storage means (43) of the third-party equipment (4), or else at least one identifier of the RFID tag (1) of the user of this mobile terminal (3) and data defining the third-party equipment (4) authorised to take control of the mobile terminal (3).

4. System according to one of Claims 2 and 3, **characterised in that** the means for creating instructions (10) to control mobile terminals (3), implemented in the processing means (42) of the third-party equipment (4), include means of associating with the instructions (10) an identifier of the third-party equipment (4) allowing the processing means (30) of the mobile terminal (3) to identify the third-party equipment (4), by consulting storage means (22) present in the mobile terminal (3) storing a list of third-party equipment (4) authorised to exert control over the mobile terminal (3), this authentication making it possible to authorise control of the mobile terminal (3) by the third-party equipment (4).

5. System according to one of Claims 1 to 4, **characterised in that** the storage means (43) of the third-party equipment (4) store at least one data base of the users of mobile terminals (3) provided with an RFID tag (1), the identifier of which has previously been declared to the third-party equipment (4) and stored in this data base, for the authentication of the identifiers of the RFID tags (1) installed in the mobile terminals (3) of the users and the decision on the control to be exerted the mobile terminals (3), this data base containing, on the one hand, a look-up table between each of the data items representing the declared identifiers and at least one data item representing the various instructions (10) corresponding to the control to be exerted and sent over the mobile terminal (3) of which the identifier of the RFID tag (1) is declared and, on the other hand, data representing the various control instructions (10) to be sent over the mobile terminals (3) provided with an RFID tag (1), the identifier of which is unknown.

6. System according to one of Claims 1 to 5, **characterised in that** the communication means (41) of the third-party equipment (4) include radio-frequency means for sending at least one instruction (10) to control the operation of at least one mobile terminal (3), towards at least one RFID tag (1) present in the influence field (R2) of the radio frequencies of the third-party equipment (4) and installed in the mobile terminal (3), the RFID reader (32) of which makes it possible to read the instruction received by the radio-frequency communication means (12) of the RFID tag (1) and recorded in the data storage and processing means (11) of the RFID tag (1), the module for controlling the operation of the processing means (30) of the mobile terminal (3) making it possible to execute the instruction read by the RFID reader (32).

7. System according to one of Claims 1 to 6, **characterised in that** the means for creating control instructions (10) present in the processing means (42) of the third-party equipment (4) allow the third-party equipment (4) to prepare control instructions (10), the execution of which by the module for controlling the operation of the processing means (30) of the mobile terminal (3) results in at least one parameter-setting of the mobile terminal (3), by recording at least one of the following parameters in a memory of the mobile terminal (3) storing its configuration parameters:
- keeping the mobile terminal (3) in its operating mode,
- prohibiting use of the mobile terminal (3),
- switching off the mobile terminal (3),
- deactivating the mobile terminal (3),
- putting the mobile terminal (3) into vibrator mode,
- putting the mobile terminal (3) into a mode restricted to emergency calls.

8. System according to Claims 1 to 7, **characterised in that** the means for sending requests for identification of RFID tags present in the influence field (R2) of the communication means (41) of the third-party equipment (4), are constantly activated so as to send this request for identification constantly, the RFID tag (1) including, on the one hand, means for sending the last control instruction (10) executed by the mobile terminal (3) to the third-party equipment (4), these means being activated on receipt of the request for identification, after the identifier of the RFID tag (1) is sent to the third-party equipment (4), in order to allow the latter to get an indication of the control exerted on the mobile terminals (3) present in its influence field (R2) and, on the other hand, means for creating at least one instruction to cancel the last control instruction (10) executed by the processing means (30) of the mobile terminal (3), these means being activated when the RFID tag (1) no longer receives a request for identification, to allow the mobile terminal (3) to return to normal operating mode.

9. Mobile terminal (3) for authorising external control, including an RFID reader (32) giving access to the information stored in at least one radio-frequency identification (RFID) tag (1) of the user of this mobile terminal (3), the RFID tag (1) including data storage and processing means (11) and radio-frequency communication means (12), **characterised in that**, on the one hand, the mobile terminal (3) is provided with the RFID tag (1) providing it with means for authorising the taking of control of the operation of the mobile terminal (3) by third-party equipment (4) in the influence field (R2) of which the mobile terminal (3) is located, these authorisation means including at least the data transmitted between the RFID tag (1) and the third-party equipment (4) and/or vice versa and, on the other hand, the mobile terminal (3) includes a module for controlling the operation of processing means (30) of the mobile terminal (3), set up for the execution, as a function of identifiers of the RFID tag (1) of the user of this mobile terminal (3), of at least one instruction (10) for control of the mobile terminal (3) by the authorised third-party equipment (4).

10. Mobile terminal (3) according to Claim 9, **characterised in that** the means for authorising the taking of control of the operation of the mobile terminal (3) by third-party equipment (4) include either at least one identifier of the third-party equipment (4) and data defining the third-party equipment (4) authorised to take control of the mobile terminal (3), stored in storage means (22, 11) accessible to the mobile terminal (3), or means for sending an identifier of the RFID tag so as to determine the control instructions associated with these identifiers of the RFID tag (1) in storage means (43) of the third-party equipment (4), or else at least one identifier of the RFID tag (1) of the user of this mobile terminal (3) and data defining the third-party equipment (4) authorised to take control of the mobile terminal (3), stored in storage means (22, 11) accessible to the mobile terminal (3).

11. Mobile terminal (3) according to one of Claims 9 and 10, **characterised in that** the processing means (30) of the mobile terminal (3) include means for configuring the mobile terminal (3) in order to authorise its external control by third-party equipment (4), the mobile terminal (3) including input and display means (34) for, on the one hand, displaying a menu for entering a personal code authorising access to a menu for selecting a choice, among at least a choice to authorise external control and a choice to refuse external control by third-party equipment (4), and, on the other hand, entry by the user of the mobile terminal (3) of the personal code authorising access to the menu for selecting a choice and at least a choice to authorise or to refuse external control of the mobile terminal (3), the processing means (30) of the mobile terminal (3) also allowing the authentication, on the one hand, of the identifier of the RFID tag (1) read by the RFID reader (32) of the mobile terminal (3) and, on the other hand, of the personal code entered by the user, by consulting storage means (22) present in the mobile terminal (3), then, if necessary, putting the mobile terminal (3) on standby for at least one control instruction (10) from third-party equipment (4) when a choice authorising external control has been entered,

12. Mobile terminal (3) according to one of Claims 9 to 11, **characterised in that** the means for configuring the mobile terminal (3) can be activated by the processing means (30) of the mobile terminal (3), each time the mobile terminal (3) is initialised and at the request of the user, by using a specific menu, on the input and display means (34) of the mobile terminal (3).

13. Mobile terminal (3) according to one of Claims 9 to 12, **characterised in that** the means for configuring the mobile terminal (3) include means for recording, in the storage means (22) present in the mobile terminal (3), the personal code authorising access to the menu for selecting a choice of external control of the mobile terminal (3), entered by the user when external control of the mobile terminal (3) is first authorised, this personal code being recorded in correspondence with the identifier of the RFID tag (1) read by RFID reader (32) and recorded in the storage means (22) present in the mobile terminal (3), when external control of the mobile terminal (3) is first authorised.

14. Mobile terminal (3) according to one of Claims 9 to 13, **characterised in that** it includes a portable electronic module consisting of a SIM card (2) accessible by using a SIM card reader (33) of the mobile terminal (3) and having data storage means (22) in which the module for controlling the operation of the mobile terminal (3) is stored, this module consisting of a tool application recordable in the SIM card (2), known as a "SIM Tool Kit" application controlling the processing means (30) of the mobile terminal (3) for executing control instructions (10) sent by the third-party equipment (4) and allowing the mobile terminal (3) to be configured for authorising the external control of its operation.

15. Terminal according to one of Claims 9 to 14, **characterised in that** the processing means (30) of the mobile terminal (3) include means for cancelling the last control instruction (10) executed, these means being activated automatically when the mobile terminal (3) is switched off or on and capable of activation by the user by selecting a specific menu.

16. Portable electronic module (2) for authorising external control, for the external control of at least one mobile terminal (3) by at least one piece of third-party equipment (4) provided with means (41) of communicating with at least one radio-frequency identification (RFID) tag (1) installed in the mobile terminal (3) present in the influence field (R2) of the third-party equipment (4), **characterised in that**, on the one hand, an RFID tag (1) is installed in the portable electronic module (2) and provides means for authorising the taking of control of the operation of the mobile terminal (3) by third-party equipment (4) in the influence field (R2) of which the mobile terminal (3) is located, these authorisation means including at least data transmitted between the RFID tag (1) and the third-party equipment (4) and/or vice versa and that, on the other hand, the portable electronic module (2) has storage means (22) accessible by a reader (33) of the mobile terminal (3), these storage means (22) storing a module for controlling the operation of the mobile terminal (3), this module consisting of an application set up for the execution, as a function of identifiers of the RFID tag (1) of the user of this mobile terminal (3), of at least one instruction (10) for control of the mobile terminal (3) by the authorised third-party equipment (4).

17. Portable electronic module (2) according to Claim 18, **characterised in that** the means for authorising the taking of control of the operation of the mobile terminal (3) by third-party equipment (4) include either at least one identifier of the third-party equipment (4) and data defining the third-party equipment (4) authorised to take control of the mobile terminal (3), stored in storage means (22, 11) accessible to the mobile terminal (3), or means for sending an identifier of the RFID tag so as to determine the control instructions associated with these identifiers of the RFID tag (1) in storage means (43) of the third-party equipment (4), or else at least one identifier of the RFID tag (1) of the user of this mobile terminal (3) and data defining the third-party equipment (4) authorised to take control of the mobile terminal (3), stored in storage means (22, 11) accessible to the mobile terminal (3)

18. Portable electronic module (2) according to one of Claims 16 and 17, **characterised in that** the control instructions (10) of the mobile terminal (3) are extracted from storage means (43) of the third-party equipment (4), as a function of the identifier of the RFID tag (1), then sent to the RFID tag (1) by using the radio-frequency communication means (41) of the third-party equipment (4) and are read by the processing means (30) of the mobile terminal (3) by using an RFID reader (32).

19. Portable electronic module (2) according to one of Claims 16 to 18, **characterised in that** it consists of a SIM card (2), the application stored in its storage means (22) consisting of a tool application that can be recorded in the SIM card (2), known as a "SIM tool kit" application, and the mobile terminal (3) consisting of a mobile telephone fitted with a SIM card reader (33).

20. Portable electronic module (2) according to one of Claims 16 to 18, **characterised in that** it consists of an integrated circuit (2) including a memory, the application stored in its storage means (22) consisting of an application for executing the control instructions (10) on mobile terminals (3) fitted with a memory card reader (33).

21. Method for authorising external control of at least one mobile terminal (3) by at least one control instruction (10), executable by a module for controlling the operation of the processing means (30) of the mobile terminal (3) and prepared by using processing means (42) of at least one piece of third-party equipment (4) provided with means (41) of communication with at least one radio-frequency identification (RFID) tag (1) installed in the mobile terminal (3) present in the influence field (R2) of the third-party equipment (4), **characterised in that** it includes the following steps:
- authorisation of the taking of control of the operation of the mobile terminal (3) by third-party equipment (4) in the influence field (R2) of which the mobile terminal (3) is located, at least via data transmitted between the RFID tag (1) and the third-party equipment (4) and/or vice versa,
- preliminary creation of instructions (10) for controlling mobile terminals (3), using the processing means (42) of the third-party equipment (4) including means for creating control instructions (10) making it possible to prepare, using data entry means and display means of the third-party equipment (4), control instructions (10) executable by a module for controlling the operation of the processing means (30) of mobile terminals (3) and to record these control instructions (10) in storage means (43) of the third-party equipment (4),
- sending (70), by the communication means (41) of the third-party equipment (4), of a request for identification of the RFID tags present in its influence field (R2),
- receipt (71) of the request for identification by radio-frequency communication means (12) of the RFID tag (1), then sending (72) of its identifier contained in data storage and processing means (11) of the RFID tag (1),
- receipt (73) of the identifier of the RFID tag (1) by the communication means (41) of the third-party equipment (4),
- authentication (74) of the identifier by the processing means (42) of the third-party equipment (4) and decision (75) to send at least one instruction (10) to control the mobile terminal (3) associated with the RFID tag (1).

22. Method according to Claim 21, **characterised in that** the step of authorising the taking of control of the operation of the mobile terminal (3) by the third-party equipment (4) includes:
- either a step of sending, by the third-party equipment (4) to the RFID tag (1), of at least one identifier of the third-party equipment (4) then of comparison, by the control module, of this identifier with data defining the third-party equipment (4) authorised to take control of the mobile terminal (3), stored in storage means (22, 11) accessible to the mobile terminal (3),
- or a step of sending, by the RFID tag (1) to the third-party equipment (4), of at least one identifier of the RFID tag (1) of the user of this mobile terminal (3) then of consultation, by the third-party equipment (4), of control instructions associated with these identifiers of the RFID tag (1) in storage means (43) of the third-party equipment (4),
- or else a step of sending, by the RFID tag (1) to the third-party equipment (4), of at least one identifier of the RFID tag (1) of the user of this mobile terminal (3) and of sending, by the mobile terminal (3), via the RFID tag (1), to the third-party equipment (4), of data defining the third-party equipment (4) authorised to take control of the mobile terminal (3), stored in storage means (22, 11) accessible to the mobile terminal (3), then comparison, by the third-party equipment (4), of this identifier with these data.

23. Method according to one of Claims 21 and 22, **characterised in that** the step (74) of authenticating the identifier of the RFID tag (1) is carried out by the processing means (42) of the third-party equipment (4), by using at least one step of consultation, in storage means (43) of the third-party equipment (4), of at least one data base of the users of mobile terminals (3) provided with an RFID tag (1), the identifier of which has been declared to the third-party equipment (4), by using a preliminary step of declaring the identifiers of the RFID tags (1), this data base containing, on the one hand, a look-up table between data representing the declared identifiers and data representing the various control instructions (10) to be sent over the mobile terminals (3) provided with an RFID tag (1), the identifier of which is declared and, on the other hand, data representing the various control instructions (10) to be sent over the mobile terminals (3) provided with an RFID tag (1), the identifier of which is unknown, consultation of this data base allowing the processing means (42) of the third-party equipment (4) to carry out the step (75) of deciding to send at least one instruction (10) making it possible to exert control over the operation of the mobile terminals (3).

24. Method according to one of Claims 21 to 23, **characterised in that** the sending of at least one instruction (10) to control the operation of the processing means (30) of the mobile terminal (3) consists of the following steps:
- sending (81) by radio frequencies, by the communication means (41) of the third-party equipment (4), to the RFID tag (1), of at least one instruction (10) to control the operation of the processing means (30) of the mobile terminal (3),
- receipt (82) of the instruction by the radio-frequency communication means (12) of the RFID tag (1) and recording (83) of the instruction in the data storage and processing means (11) of the RFID tag (1),
- reading (84) of the instruction, by an RFID reader (32) of the mobile terminal (3) and execution (85) of the instruction by the processing means (30) of the mobile terminal (3).

25. Method according to one of Claims 21 to 24, **characterised in that** the steps of sending at least one instruction making it possible to exert control over the operation of the mobile terminal (3) trigger the execution (85) of the instruction by the processing means (30) of the mobile terminal (3), this execution (85) consisting of at least one step of recording, in the mobile terminal (3), of at least one parameter among the following parameters:
- keeping the mobile terminal (3) in its operating mode,
- prohibiting the use of the mobile terminal (3),
- switching off the mobile terminal (3),
- deactivating the mobile terminal (3),
- putting the mobile terminal into vibrator mode (3),
- putting the mobile terminal (3) into a mode restricted to emergency calls.

26. Method according to one of Claims 21 to 25, **characterised in that** external control of the mobile terminal (3) by the third-party equipment (4) requires a preliminary configuration (60) of the mobile terminal (3) by its user, by implementing the following steps:
- display (81) of a menu for entering a personal code to authorise external control of the mobile terminal (3), then entry (62) of this personal code by the user of the mobile terminal (3), using input and display means (34) of the mobile terminal (3),
- authentication (83) of the personal code entered by the user, by the processing means (30) of the mobile terminal (3), by consultation of storage means (22) present in the mobile terminal (3),
- display (84) of a menu for selecting a choice, among at least a choice to authorise external control and a choice to refuse external control by third-party equipment (4), then entry (65), by the user, of at least a choice to authorise external control of the mobile terminal (3),
- waiting (66) by the mobile terminal (3) for at least one control instruction (10) from third-party equipment (4).

27. Method according to Claim 26, **characterised in that** the steps of configuring (60) the mobile terminal (3) are implemented each time the mobile terminal (3) is initialised and can also be implemented on request of the user of the mobile terminal (3) by a step of selecting a specific menu on the input and display means (34) of the mobile terminal (3).

28. Method according to one of Claims 26 and 27, **characterised in that** the first activation of the RFID tag (1) of the mobile terminal (3) at the time of the step (61) of displaying a menu for entering an RFID code consists of a step of recording the personal code to authorise external control of the mobile terminal (3), entered by the user at the time of this first activation, in the storage means (22) present in the mobile terminal (3), this recording step being accompanied by a step of recording the identifier of the RFID tag (1) in correspondence with the personal code entered, in the storage means (22) present in the mobile terminal (3),

29. Method according to one of Claims 21 to 28, **characterised in that** the steps of authorising external control of the mobile terminal (3) are implemented by a module for controlling the operation of the mobile terminal (3) consisting of a tool application recordable in the SIM card (2), known as a "SIM Tool Kit" application, stored on a SIM card (2) accessible by using a SIM card reader (33) of the mobile terminal (3) and having data storage means (22), the application controlling the processing means (30) of the mobile terminal (3) for execution of the control instructions (10) sent by the third-party equipment (4) and allowing configuration of the mobile terminal (3) for authorising external control of its operation.

30. Method according to one of Claims 21 to 29, **characterised in that** the step (70) of sending, via the communication means (41) of the third-party equipment (4), of a request for identification of the RFID tags present in its influence field (R2), is repeated constantly so as, on the one hand, when the RFID tag (1) has already sent its identifier to the third-party equipment (4), to trigger a step of sending the last control instruction (10) executed by the mobile terminal (3) to the third-party equipment (4), which thus obtains an indication of the control exerted on the mobile terminals (3) present in its influence field (R2) and, on the other hand, when the RFID tag (1) receives no further requests for identification, a step of creation, by the RFID tag (1), of at least one instruction to cancel the last control instruction (10) executed by the processing means (30) of the mobile terminal (3), followed by a step of execution, by the processing means (30) of the mobile terminal (3), of this cancellation of the last instruction (10) executed.

31. Method according to one of Claims 21 to 30, **characterised in that** a step of switching the mobile terminal (3) off or on triggers a step of cancellation of the last control instruction (10) executed by the processing means (30) of the mobile terminal (3).

32. Process according to one of Claims 21 to 31, **characterised in that** the step (70) of sending, by the communication means (41) of the third-party equipment (4), of a request for identification of the RFID tags present in its influence field (R2), is accompanied by the sending of an identifier of the third-party equipment (4), followed by a step of authenticating this identifier of the third-party equipment (4) by the mobile terminal (3), by consulting storage means (22) present in the mobile terminal (3).

## Patentansprüche

1. System zur Autorisierung der externen Steuerung von mindestens einem mobilen Endgerät (3), das einen RFID-Leser (32) aufweist, durch mindestens eine Einrichtung (4) eines Dritten, mittels mindestens einer Radiofrequenz-Identifikations-(RFID)-Marke, die Daten-Speicher- und Verarbeitungs-Mittel (11) und Radiofrequenz-KommunikationsMittel (12) aufweist, wobei die RFID-Marke (1) auf das mobile Endgerät (3) implantiert ist, das sich in einem Einflussfeld (R2) der Einrichtung (4) eines Dritten befindet, **dadurch gekennzeichnet, dass**:
- das System Mittel zur Autorisierung der Übernahme der Steuerung der Funktion des mobilen Endgerätes (3) durch die Einrichtung (4) eines Dritten aufweist, wobei die Autorisierungsmittel mindestens Daten aufweisen, die zwischen der RFID-Marke (1) und der Einrichtung (4) eines Dritten und/oder umgekehrt übertragen werden,
- das mobile Endgerät (3) ein Modul zur Steuerung der Funktion von Verarbeitungsmitteln (30) des mobilen Endgerätes (3) aufweist, das eingerichtet ist zum Ausführen von mindestens einem Befehl (10) zur Steuerung des mobilen Endgerätes (3) durch die autorisierte Einrichtung (4) eines Dritten in Abhängigkeit von Identifizierern der RFID-Marke (1) des Benutzers des mobilen Endgerätes (3), wobei der Befehl (10) von einer autorisierten Einrichtung (4) eines Dritten ausgearbeitet und versendet wird, wobei letztere aufweist: einerseits Mittel (41) zur Kommunikation mit RFID-Marken (1), die sich in ihrem Einflussfeld (R2) befinden, und andererseits Verarbeitungsmittel (42), die Mittel zur Authentifizierung der RFID-Marken-Identifizierer (1) und Mittel zur Entscheidung des Versendens von Steuerbefehlen (10) aufweisen, die von den Modulen zur Steuerung der Funktion der Verarbeitungsmittel (30) von mobilen Endgeräten (3) ausführbar sind.

2. System gemäß Anspruch 1, **dadurch gekennzeichnet, dass** die Verarbeitungsmittel (42) der Einrichtung (4) eines Dritten Mittel zur Erzeugung von Befehlen (10) zur Steuerung von mobilen Endgeräten (3) aufweisen, wobei die Erzeugungsmittel mit Hilfe von Eingabemitteln und Anzeigemitteln der dritten Einrichtung (4) das Erstellen von Steuerbefehlen (10), die von den Modulen zur Steuerung der Funktion der Verarbeitungsmittel (30) von mobilen Endgeräten (3) ausführbar sind, sowie das Speichern der Steuerbefehle (10) in Speichermitteln (43) der Einrichtung (4) eines Dritten erlauben.

3. System gemäß einem der Ansprüche 1 und 2, **dadurch gekennzeichnet, dass** die Mittel zur Autorisierung der Übernahme der Steuerung der Funktion des mobilen Endgerätes (3) durch die Einrichtung (4) eines Dritten aufweisen: entweder mindestens einen Identifizierer der Einrichtung (4) eines Dritten und der Daten, die die Einrichtungen (4) eines Dritten definieren, die zum Übernehmen der Steuerung der mobilen Endgeräte (3) autorisiert sind, oder mindestens einen Identifizierer der RFID-Marke (1) des Benutzers des mobilen Endgerätes (3) und der Steuerbefehle, die mit den Identifizierern der RFID-Marke (1) in Speichermitteln (43) der dritten Einrichtung (4) verknüpft sind, oder mindestens einen Identifizierer der RFID-Marke (1) des Benutzers des mobilen Endgerätes (3) und der Daten, die die Einrichtungen (4) eines Dritten definieren, die zum Übernehmen der Steuerung des mobilen Endgerätes (3) autorisiert sind.

4. System gemäß einem der Ansprüche 2 und 3, **dadurch gekennzeichnet, dass** die Mittel zur Erzeugung von Befehlen (10) zur Steuerung von mobilen Endgeräten (3), die in den Verarbeitungsmitteln (42) der Einrichtung (4) eines Dritten implementiert sind, Mittel zum Verknüpfen eines Identifizierers der dritten Einrichtung (4) mit den Befehlen (10) aufweisen, die den Verarbeitungsmitteln (30) des mobilen Endgerätes (3) das Identifizieren der Einrichtung (4) eines Dritten erlauben, mittels des Abfragens von Speichermitteln (22), die sich in dem mobilen Endgerät (3) befinden, die eine Liste von Einrichtungen (4) eines Dritten speichern, die zum Übernehmen der Steuerung des mobilen Endgerätes (3) autorisiert sind, wobei diese Authentifizierung eine Autorisierung der Steuerung des mobilen Endgerätes (3) durch die Einrichtung (4) eines Dritten erlaubt.

5. System gemäß einem der Ansprüche 1 bis 4, **dadurch gekennzeichnet, dass** die Speichermittel (43) der Einrichtung (4) eines Dritten mindestens eine Datenbank der Benutzer von mobilen Endgeräten (3) speichern, die eine RFID-Marke (1) aufweisen, deren Identifizierer im Vorfeld bei der Einrichtung (4) eines Dritten angegeben und in der Datenbank gespeichert wurde, für die Authentifizierung der Identifizierer der RFID-Marken (1), die auf den mobilen Endgeräten (3) der Benutzer implantiert sind, und die Entscheidung der Steuerung, die für die mobilen Endgeräte (3) zu übernehmen ist, wobei die Datenbank aufweist: einerseits eine Tabelle für die Zuordnung zwischen jeder der Informationen, die für die angegebenen Identifizierer repräsentativ sind, und mindestens einer Information, die für die verschiedenen Befehle (10) repräsentativ ist, der Steuerung entsprechend, die auszuführen und an das mobile Endgerät (3) zu versenden sind, deren Identifizierer der RFID-Marke (1) angegeben ist, und andererseits Daten, die für die verschiedenen Steuerbefehle (10) repräsentativ sind, die an die mobilen Endgeräte (3) zu versenden sind, die eine RFID-Marke (1) aufweisen, deren Identifizierer unbekannt ist.

6. System gemäß einem der Ansprüche 1 bis 5, **dadurch gekennzeichnet, dass** die Kommunikationsmittel (41) der Einrichtung (4) eines Dritten aufweisen: Mittel zum Versenden mittels Radiofrequenzen von mindestens einem Befehl (10) zur Steuerung der Funktion von mindestens einem mobilen Endgerät (3) in Richtung zu mindestens einer RFID-Marke (1), die sich in dem Einflussfeld (R2) der Radiofrequenzen der Einrichtung (4) eines Dritten befindet und auf dem mobilen Endgerät (3) implantiert ist, dessen RFID-Leser (32) das Lesen des Befehls erlaubt, der von den Mitteln (12) zur Kommunikation mittels Radiofrequenzen der RFID-Marke (1) empfangen und in den Mitteln (11) zum Speichern und Verarbeiten von Daten der RFID-Marke (1) gespeichert wird, wobei das Modul zur Steuerung der Funktion der Verarbeitungsmittel (30) des mobilen Endgerätes (3) das Ausführen des von dem RFID-Leser (32) gelesenen Befehls erlaubt.

7. System gemäß einem der Ansprüche 1 bis 6, **dadurch gekennzeichnet, dass** die Mittel zum Erzeugen von Steuerbefehlen (10), die sich in den Verarbeitungsmitteln (42) der Einrichtung (4) eines Dritten befinden, der Einrichtung (4) eines Dritten das Erstellen von Steuerbefehlen (10) erlauben, deren Ausführung durch das Funktions-Steuer-Modul der Verarbeitungsmittel (30) des mobilen Endgerätes (3) zu mindestens einer Parametrisierung des mobilen Endgerätes (3) führt, durch Speichern von mindestens einem der folgenden Parameter in einem Speicher des mobilen Endgerätes (3), der seine Konfigurationsparameter speichert:
- Halten des mobilen Endgerätes (3) in seinem Funktionsmodus,
- Verbot der Benutzung des mobilen Endgerätes (3),
- Ausschalten des mobilen Endgerätes (3),
- Schalten des mobilen Endgerätes (3) in den Bereitschaftsmodus,
- Schalten des mobilen Endgerätes (3) in den Vibrations-Modus,
- Schalten des mobilen Endgerätes (3) in den Modus, der auf Notrufe beschränkt ist.

8. System gemäß einem der Ansprüche 1 bis 7, **dadurch gekennzeichnet, dass** die Mittel zum Senden von Anfragen zur Identifikation der RFID-Marken, die sich in dem Einflussfeld (R2) der Kommunikationsmittel (41) der Einrichtung (4) eines Dritten befinden, dauerhaft aktiviert sind, so dass diese Identifikations-Anfrage ständig gesendet wird, wobei die RFID-Marke (1) aufweist: einerseits Mittel zum Senden des letzten Steuerbefehls (10), der von dem mobilen Endgerät (3) ausgeführt wurde, in Richtung zu der Einrichtung (4) eines Dritten, wobei die Mittel bei Empfang der IdentifizierungsAnfrage aktiviert werden, nach dem Senden des Identifizierers der RFID-Marke (1) an die Einrichtung (4) eines Dritten, damit letzterer ermöglicht wird, eine Anzeige der Steuerung zu erhalten, die auf den mobilen Endgeräten (3) ausgeführt wird, die sich in ihrem Einflussfeld (R2) befinden, und andererseits Mittel zum Erzeugen von mindestens einem Befehl zum Löschen des letzten Steuerbefehls (10), der von den Verarbeitungsmitteln (30) des mobilen Endgerätes (3) ausgeführt wurde, wobei die Mittel aktiviert werden, wenn die RFID-Marke (1) keine Identifikations-Anfrage mehr empfängt, so dass eine Rückkehr des mobilen Endgerätes (3) in einen normalen Funktionsmodus erlaubt wird.

9. Mobiles Endgerät (3) mit externer Steuerungs-Autorisierung, das einen RFID-Leser (32) aufweist, der einen Zugriff auf die Informationen erlaubt, die in mindestens einer Radiofrequenz-Identifikations-(RFID)-Marke (1) des Benutzers des mobilen Endgerätes (3) gespeichert sind, wobei die RFID-Marke (1) Mittel (11) zum Speichern und Verarbeiten von Daten und Mittel (12) zur Kommunikation mittels Radiofrequenzen aufweist, **dadurch gekennzeichnet, dass** einerseits das mobile Endgerät (3) die RFID-Marke (1) aufweist, die ihm Mittel zur Autorisierung der Übernahme der Steuerung der Funktion des mobilen Endgerätes (3) durch eine Einrichtung (4) eines Dritten bereitstellt, in deren Einflussfeld (R2) sich das mobile Endgerät (3) befindet, wobei die Autorisierungsmittel mindestens Daten aufweisen, die zwischen der RFID-Marke (1) und der Einrichtung (4) eines Dritten und/oder umgekehrt übertragen werden, und andererseits das mobile Endgerät (3) ein Modul zur Steuerung der Funktion von Verarbeitungsmitteln (30) des mobilen Endgerätes (3) aufweist, das eingerichtet ist zum Ausführen in Abhängigkeit von Identifizierern der RFID-Marke (1) des Benutzers des mobilen Endgerätes, von mindestens einem Befehl (10) zur Steuerung des mobilen Endgerätes (3) durch die autorisierte Einrichtung (4) eines Dritten.

10. Mobiles Endgerät (3) gemäß Anspruch 9, **dadurch gekennzeichnet, dass** die Mittel zur Autorisierung der Übernahme der Steuerung der Funktion des mobilen Endgerätes (3) durch eine Einrichtung (4) eines Dritten aufweisen: entweder mindestens einen Identifizierer der Einrichtung (4) eines Dritten und der Daten, die die Einrichtungen (4) eines Dritten definieren, die zur Übernahme der Steuerung des mobilen Endgerätes (3) autorisiert sind, die in Speichermitteln (22, 11) gespeichert sind, auf die das mobile Endgerät (3) zugreifen kann, oder Mittel zum Versenden eines Identifizierers der RFID-Marke zum Ermitteln der Steuerbefehle, die mit den Identifizierern der RFID-Marke (1) in Speichermitteln (43) der Einrichtung (4) eines Dritten verknüpft sind, oder mindestens einen Identifizierer der RFID-Marke (1) des Benutzers des mobilen Endgerätes (3) und der Daten, die die Einrichtungen (4) eines Dritten definieren, die zum Übernehmen der Steuerung des mobilen Endgerätes (3) autorisiert sind, die in Speichermitteln (22, 11) gespeichert sind, auf die das mobile Endgerät (3) zugreifen kann.

11. Mobiles Endgerät (3) gemäß einem der Ansprüche 9 und 10, **dadurch gekennzeichnet, dass** die Verarbeitungsmittel (30) des mobilen Endgerätes (3) Mittel zur Konfiguration des mobilen Endgerätes (3) aufweisen, so dass seine externe Steuerung durch eine Einrichtung (4) eines Dritten autorisiert wird, wobei das mobile Endgerät (3) Eingabe- und AnzeigeMittel (34) aufweist, einerseits für das Anzeigen eines Menüs zum Eingeben eines persönlichen Codes, der den Zugriff zu einem Auswahlmenü einer Auswahl aus mindestens einer Auswahl zur Autorisierung der externen Steuerung und einer Auswahl zum Verweigern der externen Steuerung durch Einrichtungen (4) eines Dritten autorisiert, und andererseits für das Eingeben durch den Benutzer des mobilen Endgerätes (3) des persönlichen Codes zur Autorisierung des Zugriffs auf das Auswahlmenü einer Auswahl und mindestens einer Auswahl für die Autorisierung oder die Verweigerung der externen Steuerung des mobilen Endgerätes (3), wobei die Verarbeitungsmittel (30) des mobilen Endgerätes (3) ferner ermöglichen: die Authentifizierung von einerseits dem Identifizierer der RFID-Marke (1), die von dem RFID-Leser (32) des mobilen Endgerätes (3) gelesen wird, und andererseits dem von dem Benutzer eingegebenen persönlichen Code, durch die Abfrage von Speichermitteln (22), die sich in dem mobilen Endgerät (3) befinden, und, gegebenenfalls das Bringen in Wartestellung des mobilen Endgerätes (3) auf mindestens einen Steuerbefehl (10) durch eine Einrichtung (4) eines Dritten, wenn eine Externe-Steuerung-Autorisierungs-Auswahl eingegeben wurde.

12. Mobiles Endgerät (3) gemäß einem der Ansprüche 9 bis 11, **dadurch gekennzeichnet, dass** die Konfigurationsmittel des mobilen Endgerätes (3) durch Verarbeitungsmittel (30) des mobilen Endgerätes (3) bei jeder Initialisierung des mobilen Endgerätes (3) und auf Anfrage des Benutzers aufgrund eines besonderen Menüs auf den Eingabe- und Anzeige-Mitteln (34) des mobilen Endgerätes (3) aktivierbar sind.

13. Mobiles Endgerät (3) gemäß einem der Ansprüche 9 bis 12, **dadurch gekennzeichnet, dass** die Konfigurationsmittel des mobilen Endgerätes (3) in den Speichermitteln (22), die sich in dem mobilen Endgerät (3) befinden, Mittel zum Aufzeichnen des persönlichen Codes zur Autorisierung des Zugriffs auf das Auswahlmenü einer Auswahl der externen Steuerung des mobilen Endgerätes (3) aufweisen, der durch den Benutzer bei der ersten Autorisierung der externen Steuerung des mobilen Endgerätes (3) eingegeben wird, wobei der persönliche Code entsprechend dem Identifizierer der RFID-Marke (1) aufgezeichnet wird, der bei der ersten Autorisierung einer externen Steuerung des mobilen Endgerätes (3) von dem RFID-Leser (32) gelesen und in den Speichermitteln (22) gespeichert wird, die sich in dem mobilen Endgerät (3) befinden.

14. Mobiles Endgerät (3) gemäß einem der Ansprüche 9 bis 13, **dadurch gekennzeichnet, dass** es ein tragbares elektronisches Modul aufweist, das aus einer SIM-Karte (2) besteht, auf die aufgrund eines SIM-Karten-Lesers (33) des mobilen Endgerätes (3) zugegriffen werden kann, und das Mittel (22) zum Speichern von Daten aufweist, in denen das Modul zur Steuerung der Funktion des mobilen Endgerätes (3) gespeichert ist, wobei das Modul aus einer Werkzeug-Anwendung besteht, die in der SIM-Karte (2) speicherbar ist, die als "SIM-Tool-Kit" bezeichnet wird, die die Verarbeitungsmittel (30) des mobilen Endgerätes (3) für die Ausführung der Steuerbefehle (10) steuert, die von der Einrichtung (4) eines Dritten gesendet werden, und die Konfiguration des mobilen Endgerätes für die Autorisierung der externen Steuerung seiner Funktion erlaubt.

15. Endgerät gemäß einem der Ansprüche 9 bis 14, **dadurch gekennzeichnet, dass** die Verarbeitungsmittel (30) des mobilen Endgerätes (3) Mittel zum Löschen des letzten ausgeführten Steuerbefehls (10) aufweisen, wobei die Mittel bei Ausschalten oder Anschalten des mobilen Endgerätes (3) automatisch aktiviert werden und durch Auswahl eines bestimmten Menüs von dem Benutzer aktiviert werden können.

16. Tragbares elektronisches Modul (2) zur Autorisierung von externer Steuerung, für die externe Steuerung von mindestens einem mobilen Endgerät (3) durch mindestens eine Einrichtung (4) eines Dritten, die Mittel (41) zur Kommunikation mit mindestens einer Radiofrequenz-Identifikations-(RFID)-Marke (1) aufweist, die auf dem mobilen Endgerät (3) eingebaut ist, das sich in dem Einflussfeld (R2) der Einrichtung (4) eines Dritten befindet, **dadurch gekennzeichnet, dass** einerseits eine RFID-Marke (1) auf das tragbare elektronische Modul (2) implantiert ist und Mittel zur Autorisierung der Übernahme der Steuerung der Funktion des mobilen Endgerätes (3) durch eine Einrichtung (4) eines Dritten ausgibt, in deren Einflussfeld (R2) sich das mobile Endgerät (3) befindet, wobei die Autorisierungsmittel mindestens Daten aufweisen, die zwischen der RFID-Marke (1) und der Einrichtung (4) eines Dritten und/oder umgekehrt übertragen werden, und andererseits das tragbare elektronische Modul (2) Speichermittel (22) aufweist, auf die durch einen Leser (33) des mobilen Endgerätes (3) zugegriffen werden kann, wobei die Speichermittel (22) ein Modul zur Steuerung der Funktion des mobilen Endgerätes (3) speichern, wobei das Modul aus einer Anwendung besteht, die eingerichtet ist zum Ausführen in Abhängigkeit von Identifizierern der RFID-Marke
(1) des Benutzers des mobilen Endgerätes (3), von mindestens einem Befehl (10) zur Steuerung des mobilen Endgerätes (3) durch die autorisierte Einrichtung (4) eines Dritten.

17. Tragbares elektronisches Modul (2) gemäß Anspruch 16, **dadurch gekennzeichnet, dass** die Mittel zur Autorisierung der Übernahme der Steuerung der Funktion des mobilen Endgerätes (3) durch eine Einrichtung (4) eines Dritten aufweisen:
entweder mindestens einen Identifizierer der dritten Einrichtung (4) und der Daten, die die Einrichtungen (4) eines Dritten definieren, zur Übernahme der Steuerung des mobilen Endgerätes (3) autorisiert sind, die in den Speichermitteln (22, 11) gespeichert sind, auf die das mobile Endgerät (3) zugreifen kann, oder Mittel zum Versenden eines Identifizierers der RFID-Marke zum Ermitteln der
Steuerbefehle, die mit den Identifizierern der RFID-Marke (1) in Speichermitteln (43) der Einrichtung (4) eines Dritten verknüpft sind, oder mindestens einen Identifizierer der RFID-Marke (1) des Benutzers des mobilen Endgerätes (3) und der Daten, die die Einrichtungen (4) eines Dritten definieren, die zum Übernehmen der Steuerung des mobilen Endgerätes (3) autorisiert sind, die in Speichermitteln (22, 11) gespeichert sind, auf die das mobile Endgerät (3) zugreifen kann.

18. Tragbares elektronisches Modul (2) gemäß einem der Ansprüche 16 und 17, **dadurch gekennzeichnet, dass** die Befehle (10) zur Steuerung des mobilen Endgerätes (3) aus Speichermitteln (43) der Einrichtung (4) eines Dritten extrahiert werden, in Abhängigkeit von dem Identifizierer der RFID-Marke (1), anschließend mit Hilfe der Radiofrequenz-Kommunikationsmittel (41) der Einrichtung (4) eines Dritten an die RFID-Marke (1) gesendet werden und von den Verarbeitungsmitteln (30) des mobilen Endgerätes (3) mit Hilfe eines RFID-Lesers (32) gelesen werden.

19. Tragbares elektronisches Modul (2) gemäß einem der Ansprüche 16 bis 18, **dadurch gekennzeichnet, dass** es aus einer SIM-Karte (2) besteht, wobei die Anwendung, die in seinen Speichermitteln (22) gespeichert ist, aus einer Werkzeug-Anwendung besteht, die in der SIM-Karte (2) gespeichert werden kann, die als "SIM-Tool-Kit"-Anwendung bezeichnet wird, und wobei das mobile Endgerät (3) aus einem Mobiltelefon besteht, das einen SIM-Kartenleser (33) aufweist.

20. Tragbares elektronisches Modul (2) gemäß einem der Ansprüche 16 bis 18, **dadurch gekennzeichnet, dass** es aus einem integrierten Schaltkreis (2) besteht, der einen Speicher aufweist, wobei die Anwendung, die in seinen Speichermitteln (22) gespeichert ist, aus einer Anwendung zur Ausführung der Steuerbefehle (10) auf mobilen Endgeräten (3) besteht, die einen Speicherkartenleser (33) aufweisen.

21. Verfahren zur Autorisierung der externen Steuerung von mindestens einem mobilen Endgerät (3) durch mindestens einen Steuerbefehl (10), der durch ein Modul zur Steuerung der Funktion der Verarbeitungsmittel (30) des mobilen Endgerätes (3) ausführbar ist und mit Hilfe von Verarbeitungsmitteln (42) von mindestens einer Einrichtung (4) eines Dritten erstellt wird, die Mittel (41) zur Kommunikation mit mindestens einer Radiofrequenz-Identifikations-(RFID)-Marke (1) aufweist, die auf dem mobilen Endgerät (3) eingebaut ist, das sich in dem Einflussfeld (R2) der dritten Einrichtung (4) befindet, **dadurch gekennzeichnet, dass** es die folgenden Schritte aufweist:
- Autorisierung der Übernahme der Steuerung der Funktion des mobilen Endgerätes (3) durch eine Einrichtung (4) eines Dritten, in deren Einflussfeld (R2) sich das mobile Endgerät (3) befindet, mindestens mittels Daten, die zwischen der RFID-Marke (1) und der Einrichtung (4) eines Dritten und/oder umgekehrt übertragen werden,
- Erzeugung im Vorfeld von Befehlen (10) zur Steuerung von mobilen Endgeräten (3) mit Hilfe der Verarbeitungsmittel (42) der Einrichtung (4) eines Dritten, die Mittel zur Erzeugung von Steuerbefehlen (10) aufweist, die das Erstellen von Steuerbefehlen (10) mit Hilfe von Eingabemitteln und Anzeigemitteln der Einrichtung (4) eines Dritten, die durch ein Modul zur Steuerung der Funktion der Verarbeitungsmittel (30) von mobilen Endgeräten (3) ausführbar sind, und das Speichern der Steuerbefehle (10) in Speichermitteln (43) der Einrichtung (4) eines Dritten erlauben,
- Senden (70) mittels der Kommunikationsmittel (41) der Einrichtung (4) eines Dritten einer Anfrage zur Identifizierung der RFID-Marken, die sich in ihrem Einflussfeld (R2) befinden,
- Empfangen (71) der Identifikations-Anfrage durch Mittel (12) zur Kommunikation mittels Radiofrequenz der RFID-Marke (1), anschließend Versenden (72) ihres Identifizierers, der in Mitteln (11) zur Speicherung und Verarbeitung von Daten der RFID-Marke (1) enthalten ist,
- Empfangen (73) des Identifizierers der RFID-Marke (1) durch die Kommunikationsmittel (41) der Einrichtung (4) eines Dritten,
- Authentifizieren (74) des Identifizierers durch die Verarbeitungsmittel (42) der Einrichtung (4) eines Dritten und Entscheidung (75) des Versendens von mindestens einem Befehl (10) zur Steuerung des mobilen Endgerätes (3), das mit der RFID-Marke (1) verknüpft ist.

22. Verfahren gemäß Anspruch 21, **dadurch gekennzeichnet, dass** der Schritt der Autorisierung der Übernahme der Steuerung der Funktion des mobilen Endgerätes (3) durch die Einrichtung (4) eines Dritten aufweist:
- entweder einen Schritt des Versendes durch die Einrichtung (4) eines Dritten in Richtung zu der RFID-Marke (1) von mindestens einem Identifizierer der Einrichtung (4) eines Dritten, dann des Vergleichens durch das Steuermodul von diesem Identifizierer mit Daten, die die Einrichtungen (4) eines Dritten definieren, die zu der Übernahme der Steuerung des mobilen Endgerätes (3) autorisiert sind, die in Speichermitteln (22, 11) gespeichert sind, auf die das mobile Endgerät (3) zugreifen kann,
- oder einen Schritt des Versendens durch die RFID-Marke (1) in Richtung zu der Einrichtung (4) eines Dritten von mindestens einem Identifizierer der RFID-Marke (1) des Benutzers des mobilen Endgerätes (3) und anschließend des Abfragens durch die Einrichtung (4) eines Dritten von Steuerbefehlen, die mit den Identifizierern der RFID-Marke (1) in Speichermitteln (43) der Einrichtung (4) eines Dritten verknüpft sind,
- oder einen Schritt des Versendens durch die RFID-Marke (1) in Richtung zu der Einrichtung (4) eines Dritten von mindestens einem Identifizierer der RFID-Marke (1) des Benutzers des mobilen Endgerätes (3) und des Versenden mittels des mobilen Endgerätes (3) über die RFID-Marke (1) in Richtung zu der Einrichtung (4) eines Dritten von Daten, die diejenigen Einrichtungen (4) eines Dritten definieren, die zur Übernahme der Steuerung des mobilen Endgerätes (3) autorisiert sind, die in Speichermitteln (22, 11) gespeichert sind, auf die das mobile Endgerät (3) zugreifen kann, und anschließend Vergleich dieses Identifizierers mit den Daten durch die Einrichtung (4) eines Dritten.

23. Verfahren gemäß einem der Ansprüche 21 und 22, **dadurch gekennzeichnet, dass** der Schritt der Authentifizierung (74) des Identifizierers der RFID-Marke (1) durch die Verarbeitungsmittel (42) der Einrichtung (4) eines Dritten mit Hilfe von mindestens einem Abfrageschritt in Speichermitteln (43) der Einrichtung (4) eines Dritten von mindestens einer Datenbank der Benutzer von mobilen Endgeräten (3) realisiert wird, die eine RFID-Marke (1) aufweisen, deren Identifizierer bei der Einrichtung (4) eines Dritten mit Hilfe eines vorherigen Schrittes des Angebens der Identifizierer der RFID-Marken (1) angegeben wurde, wobei die Datenbank aufweist: einerseits eine Tabelle für die Zuordnung zwischen Daten, die für die angegebenen Identifizierer repräsentativ sind, Daten, die für die verschiedenen Steuerbefehle (10) repräsentativ ist, die an die mobilen Endgeräte (3) zu versenden sind, die eine RFID-Marke (1) aufweisen, deren Identifizierer angegeben ist, und andererseits Daten, die für die verschiedenen Steuerbefehle (10) repräsentativ sind, die an die mobilen Endgeräte (3) zu versenden sind, die eine RFID-Marke (1) aufweisen, deren Identifizierer unbekannt ist, wobei das Abfragen der Datenbank den Verarbeitungsmitteln (42) der Einrichtung eines Dritten das Durchführen des Schrittes der Entscheidung (75) des Versendens von mindestens einem Befehl (10) erlaubt, wodurch das Durchführen einer Steuerung der Funktion der mobilen Endgeräte (3) ermöglicht wird.

24. Verfahren gemäß einem der Ansprüche 21 bis 32, **dadurch gekennzeichnet, dass** das Versenden von mindestens einem Befehl (10) zur Steuerung der Funktion der Verarbeitungsmittel (30) des mobilen Endgerätes (3) aus den folgenden Schritten besteht:
- Versenden (81) mittels Radiofrequenz durch die Kommunikationsmittel (41) der Einrichtung (4) eines Dritten in Richtung zu der RFID-Marke (1) von mindestens einem Befehl (10) zur Steuerung der Funktion der Verarbeitungsmittel (30) des mobilen Endgerätes (3),
- Empfangen (82) des Befehls durch die Mittel (12) zur Kommunikation durch Radiofrequenz der RFID-Marke (1) und Speichern (83) des Befehls in den Mitteln (11) zur Speicherung und Verarbeitung von Daten der RFID-Marke (1),
- Lesen (84) des Befehls mittels eines RFID-Lesers (32) des mobilen Endgerätes (3) und Ausführen (85) des Befehls durch die Verarbeitungsmittel (30) des mobilen Endgerätes (3).

25. Verfahren gemäß einem der Ansprüche 21 bis 24, **dadurch gekennzeichnet, dass** die Schritte des Versendens von mindestens einem Befehl, der das Ausführen der Steuerung der Funktion des mobilen Endgerätes (3) ermöglicht, das Ausführen (85) des Befehls durch die Verarbeitungsmittel (30) des mobilen Endgerätes (3) bewirken, wobei dieses Ausführen (85) aus mindestens einem Schritt des Speicherns in dem mobilen Endgerät (3) von mindestens einem Parameter aus den folgenden Parametern besteht:
- Halten des mobilen Endgerätes (3) in seinem Funktionsmodus,
- Verbot der Benutzung des mobilen Endgerätes (3),
- Ausschalten des mobilen Endgerätes (3),
- Schalten des mobilen Endgerätes (3) in den Bereitschaftsmodus,
- Schalten des mobilen Endgerätes (3) in den Vibrations-Modus,
- Schalten des mobilen Endgerätes (3) in den Modus, der auf Notrufe beschränkt ist.

26. Verfahren gemäß einem der Ansprüche 21 bis 25, **dadurch gekennzeichnet, dass** die externe Steuerung des mobilen Endgerätes (3) durch die Einrichtung (4) eines Dritten eine vorherige Konfiguration (60) des mobilen Endgerätes (3) durch seinen Benutzer mit Hilfe der Durchführung der folgenden Schritte erfordert:
- Anzeigen (61) von einem Menü zum Eingeben eines persönlichen Codes zum Autorisieren der externen Steuerung des mobilen Endgerätes (3), anschließend Eingeben (62) des persönlichen Codes durch den Benutzer des mobilen Endgerätes (3) mit Hilfe von Eingabe- und Anzeigemitteln (34) des mobilen Endgerätes (3),
- Authentifizierung (63) des persönlichen Codes, der von dem Benutzer eingegeben wurde, mittels der Verarbeitungsmittel (30) des mobilen Endgerätes (3), durch Abfragen von Speichermitteln (22), die sich in dem mobilen Endgerät (3) befinden,
- Anzeigen (64) von einem Auswahlmenü einer Auswahl aus mindestens einer Auswahl der Autorisierung der externen Steuerung und einer Auswahl der Verweigerung der externen Steuerung durch Einrichtungen (4) eines Dritten, und anschließend Eingeben (65) durch den Benutzer von mindestens einer Auswahl der Autorisierung der externen Steuerung des mobilen Endgerätes (3),
- Warten (66) des mobilen Endgerätes auf mindestens einen Befehl (10) zur Steuerung durch eine Einrichtung (4) eines Dritten.

27. Verfahren gemäß Anspruch 26, **dadurch gekennzeichnet, dass** die Schritte zur Konfiguration (60) des mobilen Endgerätes (3) bei jeder Initialisierung des mobilen Endgerätes (3) durchgeführt werden und auch auf Anfrage des Benutzers des mobilen Endgerätes (3) durch einen Schritt zur Auswahl eines bestimmten Menüs auf den Eingabe- und Anzeigemitteln (34) des mobilen Endgerätes (3) durchgeführt werden können.

28. Verfahren gemäß einem der Ansprüche 26 und 27, **dadurch gekennzeichnet, dass** die erste Aktivierung der RFID-Marke (1) des mobilen Endgerätes während des Schrittes (61) des Anzeigens eines Menüs zum Eingeben eines RFID-Codes aus einem Schritt des Speicherns des von dem Benutzer bei der ersten Aktivierung eingegebenen persönlichen Codes zur Autorisierung der externen Steuerung des mobilen Endgerätes (3) in den Speichermitteln (22), die sich in dem mobilen Endgerät (3) befinden, besteht, wobei der Schritt des Speicherns begleitet wird von einem Schritt des Speichern des Identifizierers der RFID-Marke (1) entsprechend dem eingegebenen persönlichen Code in den Speichermitteln (22), die sich in dem mobilen Endgerät (3) befinden.

29. Verfahren gemäß einem der Ansprüche 21 bis 28, **dadurch gekennzeichnet, dass** die Schritte zur Autorisierung der externen Steuerung des mobilen Endgerätes (3) mittels eines Moduls zur Steuerung der Funktion des mobilen Endgerätes (3) durchgeführt werden, das aus einer Werkzeug-Anwendung besteht, die in der SIM-Karte (2) speicherbar ist, die als "SIM-Tool-Kit"-Anwendung bezeichnet wird, die auf einer SIM-Karte (2) gespeichert ist, auf die mit Hilfe eines SIM-Kartenlesers (33) des mobilen Endgerätes zugegriffen werden kann und die Mittel (22) zum Speichern von Daten aufweist, wobei die Anwendung die Verarbeitungsmittel (30) des mobilen Endgerätes (3) für das Ausführen der Steuerbefehle (10) steuert, die von der Einrichtung (4) eines Dritten gesendet werden, und die Konfiguration des mobilen Endgerätes (3) für die Autorisierung der externen Steuerung seiner Funktion erlaubt.

30. Verfahren gemäß einem der Ansprüche 21 bis 29, **dadurch gekennzeichnet, dass** der Schritt (70) des Versendens mittels der Kommunikationsmittel (41) der dritten Einrichtung einer Identifikationsanfrage der RFID-Marken, die sich in ihrem Einflussfeld (R2) befinden, dauerhaft wiederholt wird, so dass einerseits, wenn die RFID-Marke (1) bereits ihren Identifizierer an die Einrichtung (4) eines Dritten gesendet hat, ein Schritt des Versendens des letzten Steuerbefehls (10), der von dem mobilen Endgerät (3) durchgeführt wurde, in Richtung zu der Einrichtung (4) eines Dritten bewirkt wird, die so eine Anzeige der Steuerung erhält, die auf die mobilen Endgeräte (3) ausgeübt wird, die sich in ihrem Einflussfeld (R2) befinden, und dass andererseits, wenn die RFID-Marke (1) keine Identifizierungsanfrage mehr empfängt, ein Schritt des Erzeugens mittels der RFID-Marke (1) von mindestens einem Löschungsbefehl des letzten von den Verarbeitungsmitteln (30) des mobilen Endgerätes (3) ausgeführten Steuerbefehls (10) bewirkt wird, gefolgt von einem Schritt der Ausführung mittels der Verarbeitungsmittel (30) des mobilen Endgerätes (3) des Löschens des letzten ausgeführten Befehls (10).

31. Verfahren gemäß einem der Ansprüche 21 bis 30, **dadurch gekennzeichnet, dass** ein Schritt des Ausschaltens oder Anschaltens des mobilen Endgerätes (3) einen Schritt des Löschens des letzten von den Verarbeitungsmitteln (30) des mobilen Endgerätes durchgeführten Steuerbefehls (10) bewirkt.

32. Verfahren gemäß einem der Ansprüche 21 bis 31, **dadurch gekennzeichnet, dass** der Schritt (70) des Versendens mittels der Kommunikationsmittel (41) der Einrichtung (4) eines Dritten einer Anfrage zur Identifizierung der RFID-Marken, die sich in ihrem Einflussfeld (R2) befinden, begleitet wird von dem Versenden eines Identifizierers der Einrichtung (4) eines Dritten, gefolgt von einem Schritt der Authentifizierung des Identifizierers der Einrichtung (4) eines Dritten durch das mobile Endgerät (3) durch Abfragen von Speichermitteln (22), die sich in dem mobilen Endgerät (3) befinden.
